Europäisches Patentamt

**(19)** European Patent Office

Office européen des brevets

(11) Publication number : **0 296 344 B1**

(12) **EUROPEAN PATENT SPECIFICATION**

(45) Date of publication of patent specification :
09.08.95 Bulletin 95/32

(51) Int. Cl.[6] : **G06F 7/50**

(21) Application number : **88107310.0**

(22) Date of filing : **06.05.88**

(54) **Parallel adder having removed dependencies.**

(30) Priority : **25.06.87 US 66364**

(43) Date of publication of application :
**28.12.88 Bulletin 88/52**

(45) Publication of the grant of the patent :
**09.08.95 Bulletin 95/32**

(84) Designated Contracting States :
**DE FR GB**

(56) References cited :
**PROCEEDINGS OF THE 5TH SYMPOSIUM ON COMPUTER ARITHMETIC, Ann Arbor, Michigan, 18th - 19th May 1981, pages 256-263; C.A. PAPACHRISTOU: "Algorithms for parallel addition and parallel polynomial evaluation"**

(56) References cited :
**IBM TECHNICAL DISCLOSURE BULLETIN, vol. 24, no. 8, January 1982, pages 4393-4398, New York, US; A. WEINBERGER: "High-speed binary adder"**
**IBM TECHNICAL DISCLOSURE BULLETIN, vol. 14, no. 1, June 1971, pages 205-207, New York, US; A. WEINBERGER: "A 32-bit adder using partitioned memory arrays as universal logic elements"**

(73) Proprietor : **International Business Machines Corporation**
**Old Orchard Road**
**Armonk, N.Y. 10504 (US)**

(72) Inventor : **Vassiliadis, Stamatis**
**713 Vestal Road**
**Vestal New York 13850 (US)**

(74) Representative : **Schäfer, Wolfgang, Dipl.-Ing.**
**IBM Deutschland Informationssysteme GmbH**
**Patentwesen und Urheberrecht**
**D-70548 Stuttgart (DE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 296 344 B1

## Description

The invention relates to a method and an apparatus for use in a computer to perform high-speed additions of operands having a predetermined length.

Arithmetic operations in computer systems, such as addition and subtraction, are performed on two operands, each having a given number of bits (e.g., N bits), the operations yielding an N-bit result.

Because a great number of arithmetic operations can be performed by high speed digital computers in a relatively short time interval (e.g., one second), the time required to perform any one of such operations can become a significant factor when multiplied by the number of operations per second. Designers are therefore obliged to invent ever faster formulations to perform arithmetic operations.

Conventional addition functions, such as carry (or borrow) generate and carry propagate, are described in COMPUTER ARITHMETIC PRINCIPLES, ARCHITECTURE, AND DESIGN, by Kai Hwang. These functions generally depend on two paths: one that produces carries into a bit position and one that produces a half-sum. The conventional recursive formulas are shown below and are derived as follows:

Adder Equations

$$A, B = OPERANDS$$

$$
\begin{array}{ccccc}
A_0 & \cdots & A_i & \cdots & A_n \\
B_0 & \cdots & B_i & \cdots & B_n \\
\hline
S_0 & \cdots & S_i & \cdots & S_n
\end{array}
$$

$$S = RESULT$$

For every position i a carry is received from position i+1 to be added with $A_i$, $B_i$. In essence:

$$
\begin{array}{r}
A_i \\
B_i \\
+ \quad C_{i+1} \\
\hline
C_i S_i
\end{array}
$$

where $C_{i+1}$ is the carry bit from position i+1.

The maximum value for each individual operand is one. Therefore, MAX $(A_i + B_i + C_{i+1}) = 1 + 1 + 1 = 3$. Since two bits are required to represent the number three (11, in binary code), a carry to the next position is generated.

All combinations are shown below in Table 1.

## Table I

| | $C_{i+1}$ | $A_i$ | $B_i$ | $S_i$ | $C_i$ |
|---|---|---|---|---|---|
| (1) | 0 | 0 | 0 | 0 | 0 |
| (2) | 0 | 0 | 1 | 1 | 0 |
| (3) | 0 | 1 | 0 | 1 | 0 |
| (4) | 0 | 1 | 1 | 0 | 1 |
| (5) | 1 | 0 | 0 | 1 | 0 |
| (6) | 1 | 0 | 1 | 0 | 1 |
| (7) | 1 | 1 | 0 | 0 | 1 |
| (8) | 1 | 1 | 1 | 1 | 1 |

For (1): $0 + 0 + 0 = 0$, $S_i = 0$, $C_i = 0$
For (7): $1 + 1 + 0 = 2$, $S_i = 0$, $C_i = 1$

The Boolean Equations Of Table 1

$S_i = 1$ if and only if the following holds true:
$S_i$ = (2) or (3) or (5) or (8)
Now
(2) $= C_{i+1}'A_i'B_i$
where the expression N' indicates the negation of N.
So:
(2) $= 1$ if and only if $C_{i+1} = 0$, $A_i = 0$, and $B_i = 1$.
Also
(3) $= C_{i+1}'A_iB_i'$
(5) $= C_{i+1}A_i'B_i'$
(8) $= C_{i+1}A_iB_i$
Thus,

$$S_i = C_{i+1}'A_i'B_i + C_{i+1}'A_iB_i' + C_{i+1}A_i'B_i' + C_{i+1}A_iB_i$$
$$S_i = C_{i+1}' [A_i'B_i + A_iB_i'] + C_{i+1} [A_i'B_i' + A_iB_i]$$
$$A_i'B_i + A_iB_i' = \text{Exclusive - OR} \quad (\forall)$$
$$A_i'B_i' + A_iB_i = \text{Exclusive - OR - Invert} \quad (\forall')$$

Thus,

$$S_i = C_{i+1}' [A_i \forall B_i] + C_{i+1} [A_i \forall B_i]'$$

Similarly,

$$S_i = C_{i+1} \forall A_i \forall B_i$$

$A_i \forall B_i$ is defined as half sum $H_i$.

$$S_i = H_i \forall C_{i+1}$$

$C_i$ = (4) or (6) or (7) or (8)

$$C_i = C_{i+1}'A_iB_i + C_{i+1}A_i'B_i + C_{i+1}A_iB_i' + C_{i+1}A_iB_i$$

Adding the same term as one that previously appeared does not change a Boolean equation. Thus,

$$C_i = C_{i+1}'A_iB_i + C_{i+1}A_i'B_i + C_{i+1}A_iB_i' + C_{i+1}A_iB_i + C_{i+1}A_iB_i$$
$$C_i = [C_{i+1}' + C_{i+1}]A_iB_i + C_{i+1} [A_i'B_i + A_iB_i' + A_iB_i]$$

But,

$$A_i'B_i + A_iB_i' + A_iB_i = B_i[A_i' + A_i] + A_iB_i'$$
$$B_i + A_iB_i' = \text{(with a Boolean equivalence)} [B_i + A_i]$$

and

$$C_{i+1}' + C_{i+1} = 1.$$

Thus,

$$C_i = A_i B_i + \left[ A_i + B_i \right] C_{i+1}$$

$A_i B_i$ is defined as $G_i$; $A_i + B_i$ is defined as $T_i$.

Thus,

$$C_i = G_i + T_i C_{i+1}$$

that is:

$$SUM_i = H_i \veebar C_{i+1}$$

and

$$C_i = G_i + T_i C_{i+1}$$

where $\veebar$ is the Exclusive OR; $SUM_i$ is the SUM of bit i.

Executing this formulation is relatively time consuming because it requires the half sum value $H_i$, which is computed immediately, and the term $C_{i+1}$, which depends on the calculation of a previous carry ($C_{i+2}$).

A better solution, using the same formulation, can be achieved using the carry-look-ahead (CLA) technique. This technique is used to speed up carry propagation in an adder. Carries that are applied to all of the bit positions of an adder can be generated simultaneously by means of additional logic circuitry.

While improvements can result using the CLA technique, a carry operation still lies in the critical path. The SUM can be computed either implicitly (i.e., by producing a carry propagated to a previous group of bits and then using a formulation for the SUM that involves that carry) or explicitly (i.e., by producing the carry into the bit position that is being considered and using an exclusive OR operation to produce the SUM). Implicit calculations produce the SUM one stage after producing a carry into a group, and explicit calculations produce the SUM two stages after the production of a carry into a group.

Accordingly, delays in the critical path are due to the production of carries. Moreover, the SUM requires at least one stage after the creation of the appropriate carry for either implicit or explicit calculation.

An improved formulation for the SUM is disclosed in the IBM Journal of Research and Development, Vol. 25, No. 3, pp. 156-166, titled "High-Speed Binary Adder" by Huey Ling. This recursive formulation is described as follows:

$$SUM_i = H_i T_i' + T_i H_i' + K_i H_{i+1} T_{i+1}$$
$$= (H_i \veebar T_i) + K_i H_{i+1} T_{i+1}$$

with the following definitions:

$$H_i = K_i + T_{i+1} H_{i+1}; \quad K_i = A_i B_i; \quad T_i = A_i + B_i.$$

The term $H_i$ is not always defined. That is, there are cases in which no value can be attributed to $H_i$. Thus $SUM_i$ in those cases has no meaning and cannot be calculated.

When operands A and B are both 32 bits wide, enumerated from 0 to 31 (0 being the most significant bit),

$$H_{31} = K_{31} + T_{32} H_{32}$$

In this case, $T_{32} = A_{32} + B_{32}$, implying that $T_{32}$ is outside the scope of the addition and has no meaning. Consequently $H_{31}$ and the SUMs 30 and 31 cannot be computed because they are described as follows:

$$SUM_{31} = H_{31} T_{31}' + T_{31} H_{31}' + K_{31} H_{32} T_{32}$$
$$SUM_{30} = H_{30} T_{30}' + T_{30} H_{30}' + K_{30} H_{31} T_{31}$$

It can also be observed that $SUM_{31}$ contains $H_{32}$ which is equal to:

$$H_{32} = K_{32} + T_{33} H_{33}$$

None of these parameters is defined, so $H_{32}$ cannot be computed.

Moreover, when a CLA operation occurs, substituting i=30, 29 and 28 results respectively in:

$$H_{30} = K_{30} + T_{31} H_{31} = K_{30} + T_{31} K_{31} + T_{31} T_{32} H_{32}$$
$$H_{29} = K_{29} + T_{30} H_{30} = K_{29} + T_{30} K_{30} + T_{30} T_{31} K_{31} + T_{30} T_{31} T_{32} H_{32}$$
$$(1) \qquad H_{28} = K_{28} + T_{29} H_{29} = K_{28} + T_{29} K_{29} + T_{29} T_{30} K_{30} + T_{29} T_{30} T_{31} K_{31} + T_{29} T_{30} T_{31} T_{32} H_{32}$$

Despite the fact that the aforementioned equations contain quantities with no meaning, which implies that $H_{28}$ is undefined as are the SUMs depending thereon, in the aforementioned article by Ling $H_{28}$ is defined and repeatedly used as follows:

$$(2) \qquad H_{28} = K_{28} + T_{29} H_{29} = K_{28} + T_{29} K_{29} + T_{29} T_{30} K_{30} + T_{29} T_{30} T_{31} K_{31} + T_{29} T_{30} T_{31} T_{32} K_{32}$$

Equation (1) is equivalent to equation (2) if and only if:

$$T_{29} T_{30} T_{31} T_{32} T_{33} H_{33} = 0.$$

This is because:

$H_{32} = K_{32} + T_{33} H_{33}$ and equation (1) can be written as:

$$(3) \quad H_{28} = K_{28} + T_{29}H_{29}$$
$$= K_{28} + T_{29}K_{29} + T_{29}T_{30}K_{30} + T_{29}T_{30}T_{31}K_{31} + T_{29}T_{30}T_{31}T_{32}K_{32} + T_{29}T_{30}T_{31}T_{32}T_{33}H_{33}$$

In conclusion, $T_{29}T_{30}T_{31}T_{32}T_{33}H_{33}$ is undefined, contains parameters not within the scope of the addition, and has no meaning. Consequently this term cannot be assumed ever to be identical to binary 0.

The CLA technique can produce redundancies. Specifically, all $T_iK_i$ are equal to $K_i$ and should have been eliminated. Similar conclusions can be applied to any length addition.

A method is also known for an efficient carry lookahead addition by partitioning the adder on the basis of trees which have a reduced logical depth (Papachristou, Algorithms for parallel Addition and parallel polynomial Evaluation, Proceedings of the 5th Sympoosium on the Computer arithmetic, Ann Arbor, Michigan, 18th to 19th May 1981, pages 256 to 263). For n-bit additions the implementation of this method constitute lookahead tree circuits of r-input standard logic elements. Also with this method result equations of a recursive type are used. The method may be applied to the parallel evaluation of polynomials. The known method is in particular effective when the number of bits is rather moderate. In advanced computers, however, the number of operand bit positions is continuously increasing and extends often to 32 bit positions and beyond.

It is a primary object of the present invention to provide a new set of equations equivalent to the addition operation that can be implemented to any chosen technology.

It is a further object of the present invention to provide apparatus for addition that can be implemented in carry-look-ahead circuitry, thus providing adders that are capable of operating in parallel fashion.

It is a further object of the invention to create a parallel adder with three logic stages of delay using a maximum 3 X 8 AND-OR book, where a book is defined as one or more cells comprising logical devices capable of computing Boolean expressions. In particular, 3 X 8 indicates a three-way AND gate and eight-way OR gate configuration.

The method according to the invention as defined in claim 1 comprises the following steps:

a) generating a plurality of different pseudo signals including pseudo generate, pseudo transmit, pseudo transmit half sum, and pseudo half sum signals,

b) generating a new-carry signal described by a recursive equation based on said pseudo generate and pseudo transmit signals,

c) generating a sum signal described by a recursive sum equation as a function of said pseudo signals and said new-carry signals,

whereby said pseudo generate signal from bit i to bit m, $G^*_{(i,m)}$, with $i \leq m$, is described by the following Boolean expression:

$$G^*_{(i,m)} = 0 \quad \text{if } i > n; \text{ and}$$
$$G^*_{(i,m)} = G_i + G_{i+1} + T_{i+1}G_{i+2} + T_{i+1}T_{i+2}G_{i+3} + \ldots + T_{i+1}T_{i+2}T_{i+3}\ldots T_{m-1}G_m \quad \text{if } i \leq n,$$

wherein $G_i = A_iB_i$, $T_i = A_i + B_i$ and $A_i$, $B_i$ are the ith bit of said operands A, B, respectively, i is an integer and n is the least significant bit position and wherein bit position i is less significant than bit position i-1 and more significant than bit position i+1,

said pseudo transmit signal from bit i to bit m, $T_{(i,m)}$, with $i \leq m$, is described by the following Boolean expression:

$$T_{(i,m)} = 1 \quad \text{if } i > n;$$

and

$$T_{(i,m)} = T_iT_{i+1}T_{i+2}\ldots T_{m-1}T_m \quad \text{if } i \leq n$$

said pseudo half sum for bit i, $H_i$, is described by the following Boolean expression:

$$H_i = | \quad \text{if } i > n$$
$$H_i = A_i \lor B_i \quad \text{if } i \leq n,$$

said pseudo transmit half sum for bit i, $M_i$, is described by the following Boolean expression:

$$M_i = | \quad \text{if } H_i = |$$
$$M_i = H_i \lor T_{i+1} \quad \text{if } H_i \neq |,$$

said new carry from bit i to bit m, $PS_{(i,m)}$, with $i \leq m$, is described by the following Boolean expression,

$$PS_{(i,m)} = Cin \quad \text{if } i > n$$
$$PS_{(i,m)} = G^*_{(i,m)} + T_{(i+1,m+1)}PS_{(m+1,z)} \quad \text{if } i \leq n,$$

z being some natural number such that $m < z$,

and said recursive sum equation, $SUM_{i-1}$, obeys the following Boolean expression:

$$SUM_{i-1} = M_{i-1}PS_{(i,m)} + H_{i-1}PS_{(i,m)}'.$$

A high-speed adder according to the invention as defined in claim 5 comprises a first stage of logic circuits producing from selected portions of said operands a plurality of pseudo signals including pseudo generate, pseudo transmit, pseudo half sum, and pseudo transmit half sum signals, a second stage of logic circuits producing from the outputs of said first stage a new-carry signal and different auxiliary signals, and a third stage of logic circuits producing from the outputs of said first and second stages a sum signal. Said first stage produces a pseudo generate signal from bit i to bit m, $G^*_{(i,m)}$, with $i \leq m$, according to the following Boolean ex-

pressions:

$$G^*_{(i,m)} = 0 \qquad \text{if } i > n;$$

and

$$G^*_{(i,m)} = G_i + G_{i+1} + T_{i+1}G_{i+2} + T_{i+1}T_{i+2}G_{i+3} + \ldots + T_{i+1}T_{i+2}T_{i+3}\ldots T_{m-1}G_m \qquad \text{if } i \leq n,$$

wherein $G_i = A_iB_i$, $T_i = A_i + B_i$ and $A_i$, $B_i$ are the ith bit of said operands A, B, respectively, i is an integer and n is the least significant bit position and wherein bit position i is less significant than bit position i-1 and more significant than bit position i+1. Said first stage also produces a pseudo transmit signal from bit i to bit m, $T_{(i,m)}$, with $i \leq m$, according to the following Boolean expression:

$$T_{(i,m)} = 1 \qquad \text{if } i > n;$$

and

$$T_{(i,m)} = T_iT_{i+1}T_{i+2}\ldots T_{m-1}T_m \qquad \text{if } i \leq n.$$

Furthermore, said first stage produces a pseudo half sum signal for bit i, $H_i$, according to the following Boolean expression:

$$H_i = | \qquad \text{if } i > n$$
$$H_i = A_i \vee B_i \qquad \text{if } i \leq n.$$

Said first stage further produces a pseudo transmit half sum signal for bit i, $M_i$, according to the following Boolean expression:

$$M_i = | \qquad \text{if } H_i = |$$
$$M_i = H_i \vee T_{i+1} \qquad \text{if } H_i \neq |.$$

Said second stage produces a new carry signal from bit i to bit m, $PS_{(i,m)}$, with $i \leq m$, according to the following Boolean expression,

$$PS_{(i,m)} = Cin \qquad \text{if } i > n$$
$$PS_{(i,m)} = G^*_{(i,m)} + T_{(i+1,m+1)}PS_{(m+1,z)} \qquad \text{if } i \leq n,$$

z being some natural number such that m < z.

and said third stage produces a sum signal $SUM_{i-1}$ according to the following Boolean expression:

$$SUM_{i-1} = M_{i-1}PS_{(i,m)} + H_{i-1}PS_{(i,m)}'.$$

Various advantageous embodiments of the invention are characterized in the dependent claims.

The present invention reduces the delay necessary to execute addition in computer arithmetic units. It is also within the scope of the invention to propose SUM equations that are proven to respect the equivalence with the addition operation, guaranteeing that the recursive formulas are operational. To reduce the delay necessary to calculate the SUM, critical quantities are generated that require less delay than do carries. The SUM is produced in such a way as to require Boolean expressions that can be implemented with the same delay as, or less delay than, delays for the conventional formulations.

The formulation of the function in accordance with the present invention is different than the formulation in the prior art. Because pseudo quantities and new-carries can be implemented faster than the carries described by conventional formulations, the new formulation of the function results in faster execution time and preserves the equivalence with the addition. Compared to the aforementioned paper by Ling, the present invention SUM equation contains less terms. Thus, when implemented, it requires smaller technology books, resulting in reduced delay. The new carry is defined for all natural numbers, implying that there are no regions of undefined quantities. Thus the SUM always has a correct addition value. The equations of the present invention produce a new-carry for look ahead with no redundancies to be excluded. Pseudo quantities are defined to improve delay in a CLA scheme, combined with group look ahead to produce defined new-carries.

Such pseudo quantities contain no redundancies, so there is no need to delete unwanted quantities, an operation that tends to penalize implementation.

New recursive equations are provided herein for the addition function. The implementation of the equations in any chosen technology can be achieved with ripple carry or with any parallel technique. The adder circuitry resulting from implementation comprises pseudo generate signals, pseudo transmit signals, pseudo half sum signals and pseudo transmit half sum signals. The new-carry is defined for any width addition and represents a binary value and a SUM equation described for ripple or parallel configurations.

All quantities can be used on single bit boundaries, or extensively for any chosen grouping of bits. All equations can accommodate any chosen technology or grouping so as to facilitate the design and to increase the performance of hardware-implemented adders under the constraints of a varied technology book set.

Two operands of a chosen length N are applied to the adder and the end result is the correct binary addition represented in an N-bit result string. In a ripple carry implemented adder, for every bit position, a pseudo transmit half sum signal is created as is a pseudo half sum signal, a new-carry signal and its complement. The ripple new-carry is created with the pseudo generate, pseudo transmit and the previous new-carry.

In parallel adders, depending on technology, a SUM equation is chosen that is convenient for the technology constraints. Depending on the width of the adder, a convenient grouping is imposed. For the chosen grouping and the SUM equations, bit pseudo transmit half sums and pseudo half sums are implemented, in addition to group pseudo transmit and pseudo generate signals as dictated by the specified SUM and grouping. For every group, the new-carry is derived and implemented, requiring its own group pseudo generate, pseudo transmit signals and a new-carry of some previous group.

With respect to the design of a 32-bit parallel adder, a choice is made to change the equations to respect the addition process while shortening the critical path by means of a set of auxiliary functions that take into account the technology constraints. Even with technology constraints of a 3 X 8 AND-OR maximum book, the altered equations produce a maximum delay of only three logic stages.

A complete understanding of the present invention may be obtained by reference to the accompanying drawings, when taken in conjunction with the detailed description thereof and in which:

Fig. 1      is a schematic block diagram showing the circuitry necessary to produce a pseudo generate signal;

Fig. 2      is a schematic block diagram showing the circuitry necessary to produce a pseudo transmit signal;

Fig. 3      is a schematic block diagram showing the circuitry necessary to produce a new-carry signal;

Fig. 4      is a schematic block diagram showing the circuitry necessary to produce pseudo half sum and pseudo transmit half sum signals;

Figs. 5-7      are schematic block diagrams that show the circuitry necessary to produce a SUM of a given bit of the addition;

Fig. 8      is a schematic block diagram showing the circuitry necessary to produce pseudo quantities T for a group of bit-length 1, 2, 3, 4;

Fig. 9      is a schematic block diagram showing the circuitry necessary to produce pseudo quantities G* for a group of bit length 1, 2, 3;

Fig. 10      is a schematic block diagram showing the circuitry necessary to produce $PS_{30}$, its negation, and the negation of the carry into the adder;

Fig. 11      is a schematic block diagram showing the circuitry necessary to produce $PS_{(22,29)}$ and the negation of the carry into the adder;

Fig. 12-18      are schematic block diagrams that show the circuitry necessary to produce auxiliary functions $Y_{(10,21)}$, $L_{(16,22)}$, $Z_{(11,15)}$, $X_{(I,9)}$, $W_{(13,21)}$, $R_{(6,15)}$, and $Q_{(i,5)}$, respectively;

Fig. 19      produces the pseudo generate quantities $G^*_{(I+1,9)}$ and its complement for i=0; and

Fig. 20      produces the SUM for the critical path delay for i=0.

For ease of comprehension the FIGURES appended hereto are described by Boolean expressions. The symbols involved in the equations are defined hereinbelow. It is assumed that bit positions are labeled 0 for the most significant bit and r for the least significant bit such that $r \geq 0$. The subscripts run high order to low. The variables i, m, n belong to the natural numbers and n+1 is the width of the addition.

The invention reduces overall delay by creating pseudo quantities and new-carries ($PS_i$), that are not equivalent or equal to the carries. $PS_i$ requires less hardware and less delay than does the implementation of carries. New SUM equations have been created that maintain equivalence with the addition function by means of pseudo quantities, a new-carry term ($PS_i$), defined properly for any width addition, and Boolean equations representing the SUM. The new SUM equations can be implemented with only one stage of delay after production of the new-carries.

<u>Notation</u>

1. N = natural numbers

2. $\forall$ = exclusive OR

3. $|$ = undefined. A quantity is defined mathematically to be "undefined" if such a quantity or any logical operation involved with such a quantity has no meaning (i.e., has no value attribute).

4. F(.) indicates that F is determined by variables not explicitly stated.

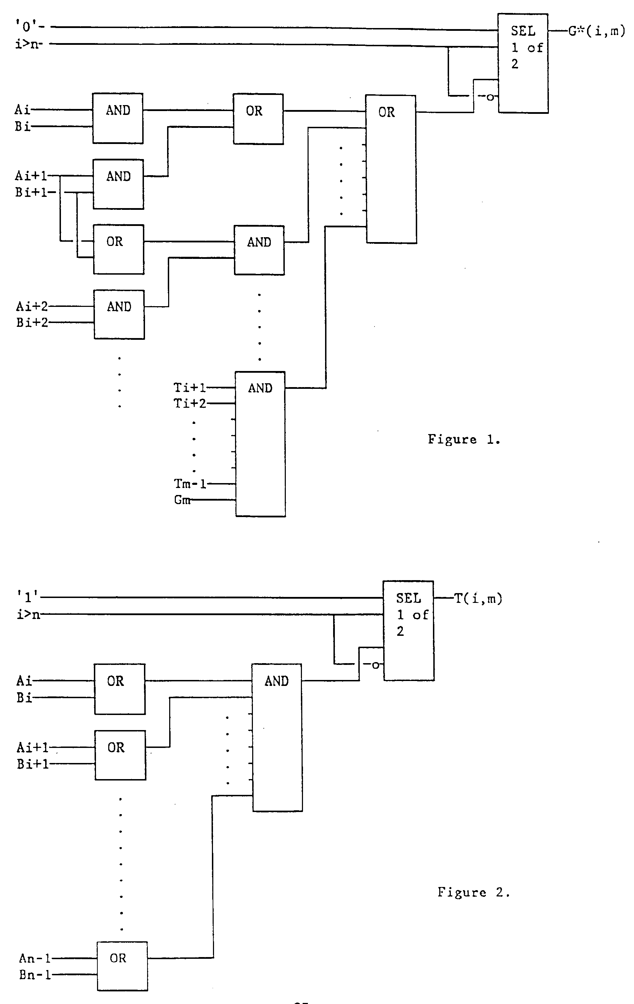

Figs. 1 through 7 can be described by the Boolean equations shown hereinbelow.

Referring now to Fig. 1, the pseudo generate signal $G^*_{(I,m)}$ is described from bit i to bit m, such that $i \leq m$ and:

$$G^*_{(i,m)} = 0 \qquad \text{if } i > n$$

$$G^*_{(i,m)} = G_i + G_{i+1} + T_{i+1}G_{i+2} + T_{i+1}T_{i+2}G_{i+3} + \ldots + T_{i+1}T_{i+2}T_{i+3}\ldots T_{m-1}G_m \qquad \text{if } i \leq n$$

Referring now also to Fig. 2, the pseudo transmit signal $T_{(I,m)}$ is described from bit i to bit m, with $i \leq m$:

$$T_{(i,m)} = 1 \qquad \text{if } i > n$$

$$T_{(i,m)} = T_i T_{i+1} T_{i+2} \ldots T_{m-1} T_m \qquad \text{if } i \leq n$$

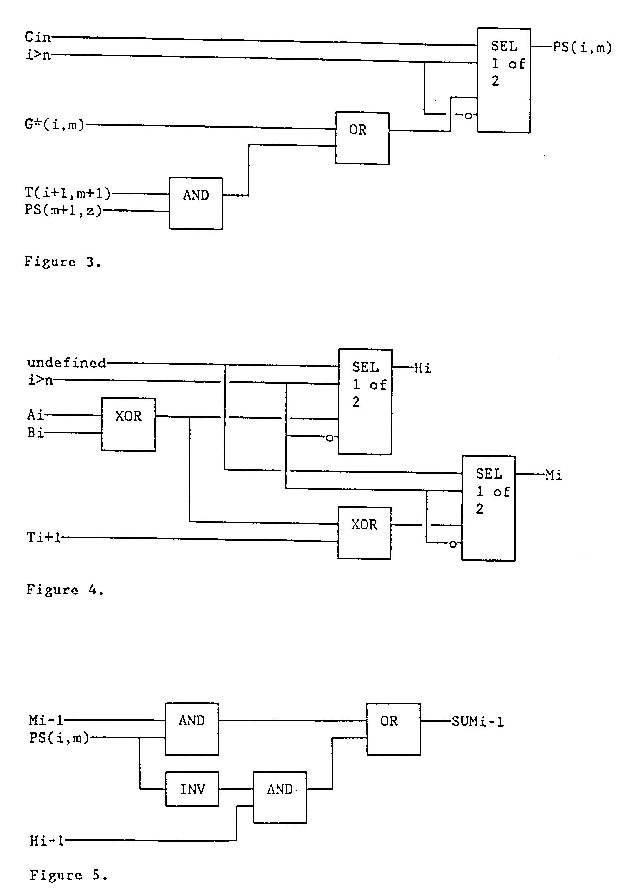

Referring now also to Fig. 3, the new-carry $PS_{(i,m)}$ is described from bit i to bit m, such that $i \leq m$:

$$PS_{(i,m)} = Cin \qquad \text{if } i > n$$
$$PS_{(i,m)} = G^*_{(i,m)} + T_{(i+1,m+1)}PS_{(m+1,z)} \qquad \text{if } i \leq n$$

where z is a natural number such that m < z and Cin is the carry into the adder.

Referring now also to Fig. 4, $H_i$, the pseudo half sum, is described for bit i.

$$H_i = | \qquad \text{if } i > n$$
$$H_i = A_i \lor B_i \qquad \text{if } i \leq n$$

and Fig. 4 also describes $M_i$, the pseudo transmit half sum for bit i.

$$M_i = | \qquad \text{if } H_i = |$$
$$M_i = H_i \lor T_{i+1} \qquad \text{if } H_i \neq |$$

Referring now also to Fig. 5, equations are described that will compute the SUM, provided that the proper quantities involved with the expressions are previously calculated.

$$SUM_{i-1} = M_{i-1}PS_{(i,m)} + H_{i-1}PS_{(i,m)}'$$

The equation described by Fig. 5 and the equation described by Fig. 3 are parametrical. The parameters involved are arbitrary (i.e., no law attributes a value to them). The only restriction imposed to the parameters by the definitions is that:

$$i \leq m < z$$

Using the above premises, by imposing different boundaries to the variables present into to the SUM formulas, and by appropriate substitutions, recursions in PS(.) are removed and some are corollaries.

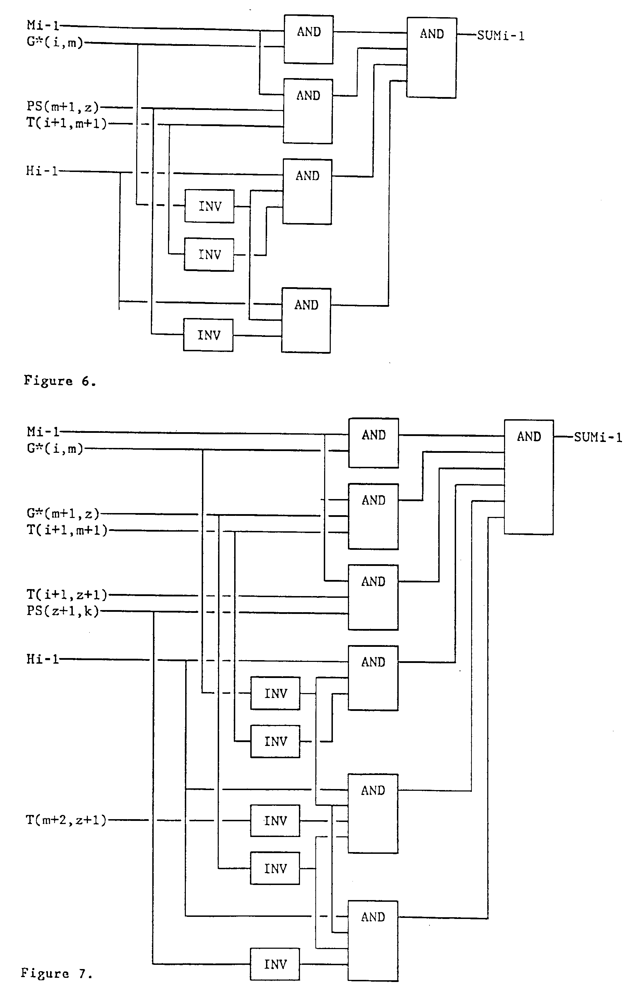

Referring now also to Fig. 6 and 7, the circuitry needed to compute the SUM equations for two of the corollaries are described.

Fig. 6 describes the following Boolean equation:

$$SUM_{i-1} = M_{i-1}G^*_{(i,m)} + M_{i-1}T_{(i+1,m+1)}PS_{(m+1,z)} + H_{i-1}T_{(i+1,m+1)}'G^*_{(i,m)}' + H_{i-1}G^*_{(i,m)}'PS_{(m+1,z)}'$$

Fig. 7 describes the following equation:

$$SUM_{i-1} = M_{i-1}G^*_{(i,m)} + M_{i-1}T_{(i+1,m+1)}G^*_{(m+1,z)} + M_{i-1}T_{(i+1,z+1)}PS_{(z+1,k)} + H_{i-1}T_{(i+1,m+1)}'G^*_{(i,m)}' + H_{i-1}$$
$$G^*_{(i,m)}'T_{(m+2,z+1)}'G^*_{(m+1,z)}' + H_{i-1}G^*_{(i,m)}'G^*_{(m+1,z)}'PS_{(z+1,k)}'$$

## New Recursive Formulas For The Sum

The following proves that the aforementioned definitions and SUM expressions will preserve the addition function.

## LEMMA 1

$$G_{(i,m)} = T_iG^*_{(i,m)} \qquad \text{if } i, m \leq n$$

### Proof

by definition

$$G_{(i,m)} = G_i + T_iG_{i+1} + T_iT_{i+1}G_{i+2} + \ldots + T_iT_{i+1}T_{i+2}\ldots T_{m-1}G_m$$
$$= G_i + T_iG_{i+1} + T_{(i,i+1)}G_{i+2} + \ldots + T_{(i,m-1)}G_m$$

but $T_iG_i = G_i$

Thus

$$G_{(i,m)} = T_i(G_i + G_{i+1} + T_{i+1}G_{i+2} + \ldots + T_{(i+1,m-1)}G_m) = T_iG^*_{(i,m)}$$

## LEMMA 2

$$G^*_{(i,z)} = G^*_{(i,m)} + T_{(i+1,m+1)}G^*_{(m+1,z)} \text{ such that } m < z$$

### Proof

by definition

$$G^*_{(i,z)} = G_i + G_{i+1} + T_{i+1}G_{i+2} + \ldots + T_{i+1}\ldots T_{m-1}G_m + T_{i+1}\ldots T_{m-1}T_mG_{m+1} + T_{i+1}T_{i+2}\ldots T_mT_{m+1}G_{m+2}$$
$$+ \ldots + T_{i+1}T_{i+2}\ldots T_{m-1}T_mT_{m+1}\ldots T_{z-1}G_z$$
$$= G^*_{(i,m)} + T_{(i+1,m+1)}(G_{m+1} + G_{m+2} + \ldots + T_{m+2}\ldots T_{z-1}G_z)$$
$$= G^*_{(i,m)} + T_{(i+1,m+1)}G^*_{(m+1,z)}$$

LEMMA 3

$$PS_{(m,z)} = PS_{(m,n)} = G^*_{(m,n)} + T_{(m+1,n)}Cin$$

Proof

Case 1 : if $z \geqq n$

by definition (Fig. 3)

$$PS_{(m,z)} = G^*_{(m,z)} + T_{(m+1,z+1)}PS_{(z+1,x)}$$

with x some N by definition (Fig. 1) and reduction

$$G^*_{(m,z)} = G_m + G_{m+1} + T_{m+1}G_{m+2} + \ldots + T_{m+1}T_{m+2}\ldots T_{n-1}G_n + T_{m+1}T_{m+2}T_{m+3}\ldots T_nT_{n+1}(G_{n+1} + G_{n+2} + \ldots + T_{n+2}\ldots T_{z-1}G_z)$$

but

$$G_{n+1} + G_{n+2} + \ldots + T_{n+2}\ldots T_{z-1}G_z = G^*_{(n+1,z)} = 0$$

Thus $G^*_{(m,z)} = G^*_{(m,n)}$ by definition (Fig. 2)

$$T_{(m+1,z+1)} = T_{m+1}T_{m+2}\ldots T_nT_{n+1}\ldots T_{z+1}$$
$$= T_{(m+1,n)}T_{(n+1,z+1)}$$

but $T_{(n+1,z+1)} = 1$

Thus $T_{(m+1,z+1)} = T_{(m+1,n)}$

by definition (Fig. 3)

$$PS_{(z+1,x)} = Cin \text{ because } z + 1 > n.$$

Thus it can be concluded that

$$PS_{(m,z)} = G^*_{(m,n)} + T_{(m+1,n)}Cin \text{ if } z \geqq n$$

Case 2 : $z < n$

(0.0) $PS_{(m,z)} = G^*_{(m,z)} + T_{(m+1,z+1)}PS_{(z+1,X)}$ such that:

(0.1) $z < X \leqq n$ or (0.2) $X > n$

subcase 1

(0.1) implies that there exists some succession of natural numbers such that
$z < X < X_0 < X_1 < X_2 < \ldots < X_j < X_i$ such that $X_i = n$.

By substitutions and by definition 2 (0.1),

$$PS_{(m,z)} = G^*_{(m,z)} + T_{(m+1,z+1)}G^*_{(z+1,X)} + T_{(m+1,X+1)}G^*_{(X+1,X)} + T_{(m+1,X+1)}G^*_{(X+1,X)} + T_{(m+1,X+1)}G^*_{(X+1,X)} + \ldots$$
$$+ T_{(m+1,X)}G^*_{(X,X)} + T_{(m+1,X+1)}PS_{(n+1,y)}$$

By applying lemma 2 as many times as needed:

$$PS_{(m,z)} = PS_{(m,n)}$$

Thus the lemma holds for subcase 1.

subcase 2

(0.2) implies that by substitution (0.0) can be written as:

$$PS_{(m,z)} = G^*_{(m,z)} + T_{(m+1,z+1)}G^*_{(z+1,n)} + T_{(m+1,z+1)}T_{(z+2,n)}PS_{(n+1,X)}$$

By lemma 2 and the definition of PS(.)

$$PS_{(m,z)} = G^*_{(m,n)} + T_{(m+1,n)}Cin$$

Thus lemma 3 holds true for subcase 2.

Theorem 1

The following set of equations is equivalent to the addition.

$$(2.1) \qquad SUM_{i-1} = M_{i-1}PS_{(i,m)} + H_{i-1}PS_{(i,m)'}$$
$$(2.2) \qquad PS_{(i,m)} = G^*_{(i,m)} + T_{(i+1,m+1)}PS_{(m+1,z)}$$

Proof

(2.1) implies:

$$SUM_{i-1} = (H_{i-1}'T_i + H_{i-1}T_i')PS_{(i,m)} + H_{i-1}PS_{(i,m)}'$$
$$= H_{i-1}'T_iPS_{(i,m)} + H_{i-1}T_i'PS_{(i,m)} + H_{i-1}PS_{(i,m)}'$$
$$= H_{i-1}'T_iPS_{(i,m)} + H_{i-1}(T_i'PS_{(i,m)} + PS_{(i,m)}')$$
$$= H_{i-1}'T_iPS_{(i,m)} + H_{i-1}(T_i' + PS_{(i,m)}')$$
$$= H_{i-1}'T_iPS_{(i,m)} + H_{i-1}(T_iPS_{(i,m)})'$$
$$= H_{i-1} \ \forall \ T_iPS_{(i,m)}$$

### Case 1: i > n+1

if i > n+1 by definition (FIGURE 4)

$$SUM_{i-1} = |$$

### Case 2: i = n+1

by definitions (Figs. 2 and 3)

$$T_i = 1 \text{ and } PS_{(i,m)} = Cin$$

Thus $T_iPS_{(i,m)} = Cin$ and $SUM_n = H_n \ \forall \ Cin$

Thus the set of equations 2.1 and 2.2 is equivalent to the addition for the least significant bits.

### Case 3: i < n+1

It must be proved that the carry to the bit position i-1, $C_i$ is equal to $T_iPS_{(i,m)}$ with $PS_{(i,m)}$ defined by (2.2) This is because in this case $H_{i-1}$ is always defined to be equal to the half sum.

Given that $C_i = G_{(i,n)} + T_{(i,n)}Cin$, prove that:

$$(1) \qquad G_{(i,n)} + T_{(i,n)}Cin = T_iPS_{(i,m)}$$

By lemma 3 $PS_{(i,m)} = G^*_{(i,n)} + T_{(i+1,n)}Cin$ Thus

$$T_iPS_{(i,m)} = T_i(G^*_{(i,n)} + T_{(i+1,n)}Cin)$$
$$= T_iG^*_{(i,n)} + T_iT_{(i+1,n)}Cin$$

but $T_iG^*_{(i,n)} = G_{(i,n)}$ (lemma 1)

and by definition

$$T_iT_{(i+1,n)} = T_{(i,n)}$$
$$\text{Thus } G_{(i,n)} + T_{(i,n)}Cin = T_iPS_{(i,m)}$$

Equations 2.1 and 2.2 are parametrical. The parameters involved are arbitrary (i.e., no law attributes a value to them). The only restriction imposed on the parameters by the foregoing definitions is that:

$$i \leqq m < z$$

Using the above premises, imposing different boundaries to the variables present into to the SUM formulas, and by appropriate substitutions, recursions in PS(.) can be removed and some are reported as the following corollaries:

### Corollary 1 (removal of one recurrence)

The following set of equations is equivalent to the addition.

$$(2.3) \qquad SUM_{i-1} = M_{i-1}G^*_{(i,m)} + M_{i-1}T_{(i+1,m+1)}PS_{(m+1,z)} + H_{i-1}T_{(i+1,m+1)}'G^*_{(i,m)}' + H_{i-1}G^*_{(i,m)}'PS_{(m+1,z)}'$$

$$(2.4) \qquad PS_{(m+1,z)} = G^*_{(m+1,z)} + T_{(m+2,z+1)}PS_{(z+1,k)}$$

### Proof

By direct substitution of (2.2) into (2.1) and imposing $i \leqq m < z < k$.

### Corollary 2 (removal of two recurrences)

The following set of equations is equivalent to the addition.

$$(2.5) \qquad SUM_{i-1} = M_{i-1}G^*_{(i,m)} + M_{i-1}T_{(i+1,m+1)}G^*_{(m+1,z)} + M_{i-1}T_{(i+1,z+1)}PS_{(z+1,k)} + H_{i-1}T_{(i+1,m+1)}'G^*_{(i,m)}' + H_{i-1}G^*_{(i,m)}'T_{(m+2,z+1)}'G^*_{(m+1,z)}' + H_{i-1}G^*_{(i,m)}'G^*_{(m+1,z)}'PS_{(z+1,k)}'$$

$$(2.6) \qquad PS_{(z+1,k)} = G^*_{(z+1,k)} + T_{(z+2,k+1)}PS_{(k+1,x)}$$

Proof

Same procedure as corollary 1 with the imposition $i \leqq m < z < k < x$.

Corollary 3 (removal of three recurrences)

The following set of equations is equivalent to the addition.

$$(2.7) \quad SUM_{i-1} = M_{i-1}G^*_{(i,m)} + M_{i-1}T_{(i+1,m+1)}G^*_{(m+1,z)} M_{i-1}T_{(i+1,z+1)}G^*_{(z+1,k)} + M_{i-1}$$
$$T_{(i+1,k+1)}PS_{(k+1,x)} + H_{i-1}T_{(i+1,m+1)}{}'G^*_{(i,m)}{}' + H_{i-1}G^*_{(i,m)}{}'T_{(m+2,z+1)}{}'G^*_{(m+1,z)}{}' + H_{i-1}$$
$$G^*_{(i,m)}{}'G^*_{(m+1,z)}{}'G^*_{(z+1,k)}{}'T_{(z+2,k+1)}{}' + H_{i-1}G^*_{(i,m)}{}'G^*_{(m+1,z)}{}'G^*_{(z+1,k)}{}'PS_{(k+1,x)}{}'$$
$$(2.8) \quad PS_{(k+1,x)} = G^*_{(k+1,x)} + T_{(k+2,x+1)}PS_{(x+1,v)}$$

Proof

Same procedure as corollary 1 with the imposition $i \leqq m < z < k < x < v$.

THEOREM 2

For every removal of recursion:
1) the resulting expressions have two terms that are recursive, namely one that contains the new-carry and one that contains its complement;
2) there are two OR terms added in respect to the previous removal;
3) the terms that contain recursion are maximum width ANDs; and
4) if an 'm'-way was the maximum-way AND in the previous removal then an 'm+1'-way AND is the maximum-way AND in the current removal.

Proof by Induction

Theorem 1 and corollary 1 imply that the base of the induction holds true (i.e., for $i = 0$ and $i = 1$).
Suppose that it is true for the removal $i$. In that case:
1) if $F_i(.)$ is a Boolean expression not recursive and $R_i(.), Y_i(.), G_i^*(.)$ and $T_i(.)$ are not recursive terms, then for the ith removal:

$$(2.9) \quad SUM_{(i-1)} = F_i(.) + R_i(.)PS_i(.) + Y_i(.)PS_i(.)'$$
$$(2.10) \quad PS_i(.) = G_i^*(.) + T_i(.)PS_{i+1}(.)$$

2) if there were n-2 terms in the previous removal then (2.9) contains n terms;
3) the terms $R_i(.)PS_i(.)$ and $Y_i(.)PS_i(.)'$ are m-way ANDs such that m is maximum-way in (2.9); and
4) the maximum-way AND in the previous removal was m-1.
It must be proven that the theorem holds for i+1. By substituting (2.10) into (2.9) implies:

$$SUM_i = F_i(.) + R_i(.)G_i^*(.) + R_i(.)T_i(.)PS_{i+1}(.) + Y_i(.)G_i^*(.)'T_i(.)' + Y_i(.)G_i^*(.)'PS_{i+1}(.)'$$

Thus by the i+1 removal:
1) of all terms involved in SUM, two are recursive;
2) the number of terms involved is n+2; and
3) given the fact that $Y_i(.)PS_i(.)$ and $R_i(.)PS_i(.)$ were maximum-way ANDs and the fact that $F_i(.)$ remains unchanged, the maximum width ANDs are the terms $Y_i(.)G_i^*(.)'T_i(.)'$, $R_i(.)T_i(.)PS_{i+1}(.)$ and $Y_i(.)G_i^*(.)'PS_{i+1}(.)'$ which includes the two recursive terms. Because the width of the AND was m, all the above quantities are 'm+1'-way ANDs.
Therefore the theorem holds for every removal of a recursion.

Theorem 3

The equation that computes the SUM is $(i+2) \times 2(i+1)$ AND-OR function $i$ being equal to the number of the removed recurrences.

Proof by Induction

for i=0
The theorem holds because (2.1) is a $2 \times 2$ AND-OR.
Suppose it is true for i. Prove that, for i+1, the SUM is a $(i+3) \times 2(i+2)$ AND-OR.

Given that the theorem holds for i and because of theorem 2 the removal of the i+1 recursion implies that the maximum-way AND will be i+2+1 = i+3 and the maximum-way OR 2(i+1) + 2 = 2(i+2). Thus the SUM is a (i+3) X 2(i+2) AND-OR and the theorem holds true for all the removals of recursion.

While it is true that given a technology any schema may be implemented with one or more algorithms, one fact remains unique: the expressions that describe a function from its positive and/or negative primary inputs will implicitly or explicitly determine the width of the gates and consequently the equivalent books needed for an optimal implementation of the function. Because actual technologies do not allow arbitrary width gates and/or books, it can be inferred that such expressions directly or indirectly will determine the corresponding logic levels in an optimal implementation of the given function with an appropriate algorithm for any chosen technology. Thus, since in each logic level there is associated a delay and a number of cells (two of the major concerns in logic design), the "primary" expressions determine performance and area.

The above premises imply that, if two formulations exist for a function (e.g., addition) then a comparison of their AND-OR equations formulated using only the "primary" terms can certainly be used as measure of performance and cost in terms of area.

One of the objects of this invention is to shorten the critical paths of the adder and therefore to prove the superiority of the present invention with respect to conventional processes. It is sufficient to prove that the expressions involved are inherently better to implement independent of the technology and algorithms. This can be achieved by proving that the width of the "primary" expressions involved in the critical paths are of a lesser magnitude than the ones involved in conventional methods of addition and that the area required to produce the critical expressions in the present method is smaller. This is because even if it may be the case that the final formulation of the SUM as described by this new schema may require more hardware, this hardware will be involved with the non-critical paths. Thus, if the width of the "primary" expressions and the area involved in the critical paths are less, then the critical paths have been improved.

For the addition function both schemas imply that the delay of the critical paths are the ones that contain recursion, namely $C_i$ as described by (1.b) and $PS_{(i,m)}$ as described by (2.2), while the other expressions that determine the SUM can be computed immediately.

## Theorem 4

If # is the number of OR terms needed to produce $PS_{(i,m)}$ starting from the primary inputs, then 2#-1 terms are needed to produce $C_i$.

## Proof

By lemma 3
$$PS_{(i,m)} = G^*_{(i,n)} + T_{(i+1,n)} Cin$$
Let g,t be the OR terms needed respectively for $G^*_{(i,n)}$ and $T_{(i+1,n)} Cin$
Then # = g + t
Given that $C_i = G_{(i,n)} + T_{(i,n)} Cin$ and because of lemma 1:
$$G_{(i,n)} = T_i G^*_{(i,n)} = G_i + T_i G_{(i+1,n)}$$
but
$$G^*_{(i,n)} = G_i + G_{(i+1,n)}$$
Thus $G_{(i+1,n)}$ has g-1 OR terms. Given that $T_i$ has two OR terms:
$$G_{(i,n)} \text{ has } 1 + 2(g - 1) = 2g - 1 \text{ terms.}$$
Given that Cin will not produce an extra OR term and by definition $T_{(i,n)} = T_i T_{(i+1,n)}$ then: $T_{(i,n)}$ has 2t OR terms and $C_i$ has 2(g + t) - 1 = 2# - 1 OR terms.

## Theorem 5

$PS_{(i,m)}$ contains exactly $2^{(n-i+1)}$ OR terms if fully expanded.

## Proof

$$G^*_{(i,n)} \text{ contains:}$$
$$1 + 1 + 2 + 2^2 + 2^3 + \ldots + 2^{(n-i-1)}$$
$$= 1 + 2^{(n-i)} - 1 = 2^{(n-i)} \text{ OR terms.}$$
And $T_{(i+1,n)}$ contains: $2^{(n-i)}$ OR terms.
Given that Cin does not produce OR terms and by lemma 3 $PS_{(i,m)} = PS_{(i,n)} = G^*_{(i,n)} + T_{(i+1,n)} Cin$

Thus $PS_{(i,m)}$ contain $2^{(n-i)} + 2^{(n-i)} = 2^{(n-i+1)}$ OR terms.

Theorem 6

$PS_{(i,m)}$ contains: one two-way AND, $2^{(n-i)}$ (n-i+1)-way ANDs and $2^{(r-2)}$ r-way ANDs with r getting all the values between and including 2 and n-i+1 if fully expanded.

Proof

The definition $G^*_{(i,m)}$ implies that there is at least one two-way AND in $PS_{(i,n)}$ — the one due to the $G_i$ term. The terms in $G^*_{(i,m)}$ are a geometrical series after $G_i$ and the definition of the T's dictates that the width due to the T terms be equal to the corresponding power of 2. Then if r-way corresponds to the jth power of 2 in the series the definition of G determines that r = j + 2. For each power there will be $2^{(r-2)}$ r-way ANDs in $PS_{(i,n)}$. Given that $0 \leq j \leq n-i-1$, then $2 \leq j+2 \leq n-i-1+2$ and r belongs to N such that $2 \leq r \leq n-i+1$.

Finally, because of the definition of T's, there are $2^{(n-i)}$ OR terms in $T_{(i+1,n)}$Cin. Given that Cin will add an extra input to the ANDs, there exist $2^{(n-i)}$(n-i+1)-way ANDs in $PS_{(i,n)}$.

Theorem 7

There are $2^{(n-i+1)}$(n-i+2)-way ANDs and $2^{(r-2)}$ r-way ANDs with r getting all the values between and including 2 and n-i+2 in $C_i$.

Proof

By the same reasoning as in the previous theorem and realizing that the terms in $G_{(i,n)}$ are a geometrical series beginning from bit i and the fact that $C_i$ contains the term $T_{(i,n)}$ instead of $T_{(i+1,n)}$.

Theorem 8

There are exactly $2^{(n-i+2)} - 1$ OR terms in $C_i$.

Proof

Follows immediately from theorems 4 and 5.

Theorem 9

$C_i$ requires more area than $PS_{(i,m)}$.

Proof

Follows immediately from theorems 5, 6 and 8.

Theorem 10

The width of the gates involved to produce $C_i$ from its primary inputs is of a greater magnitude than the ones that produce PS(.)

Proof

Follows immediately from theorems 4, 5, 6, and 7.

Theorems 4 through 10 determine that the methodology proposed by this study will contain in its critical paths less hardware as well as less "primary" terms in its expressions than do the traditional formulation of the critical paths.

If a full carry-look-ahead is not permitted (which is the case in certain technologies) then the grouping in the factorization process will be bigger in PS(.) than in $C_i$. Therefore, PS(.) ripples less. Since rippling is directly translated to delay, the proposed schema results in implementations of faster adders than conventional adders.

One other advantage for the methodology herein described is that the corollaries explicitly state, depending on technology, that the last logic level can be used more efficiently. That is, the paths can be broken into more than one, thus removing the dependencies of PS(.) into the bit that the SUM is calculated. Nevertheless the Cin can be used on the first logic level to produce PS(.) for high order bits.

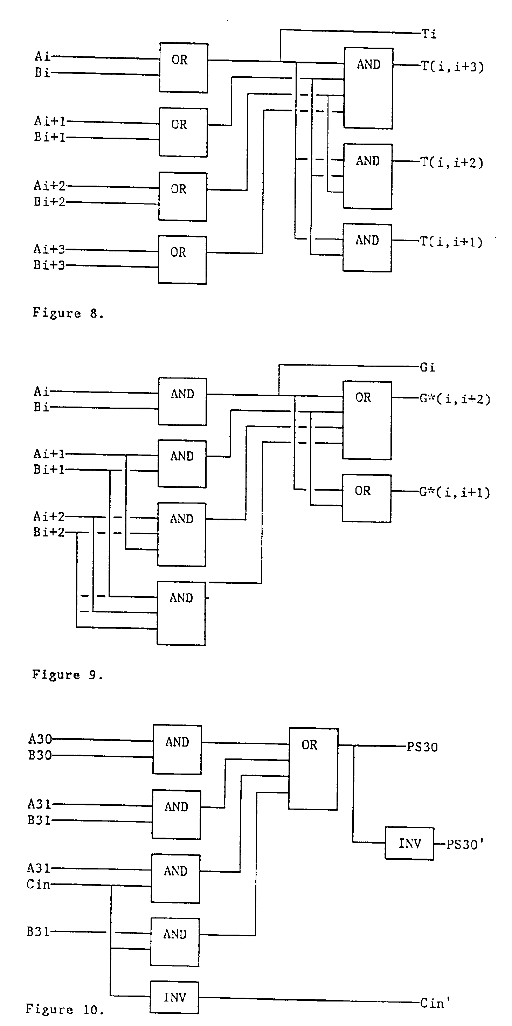

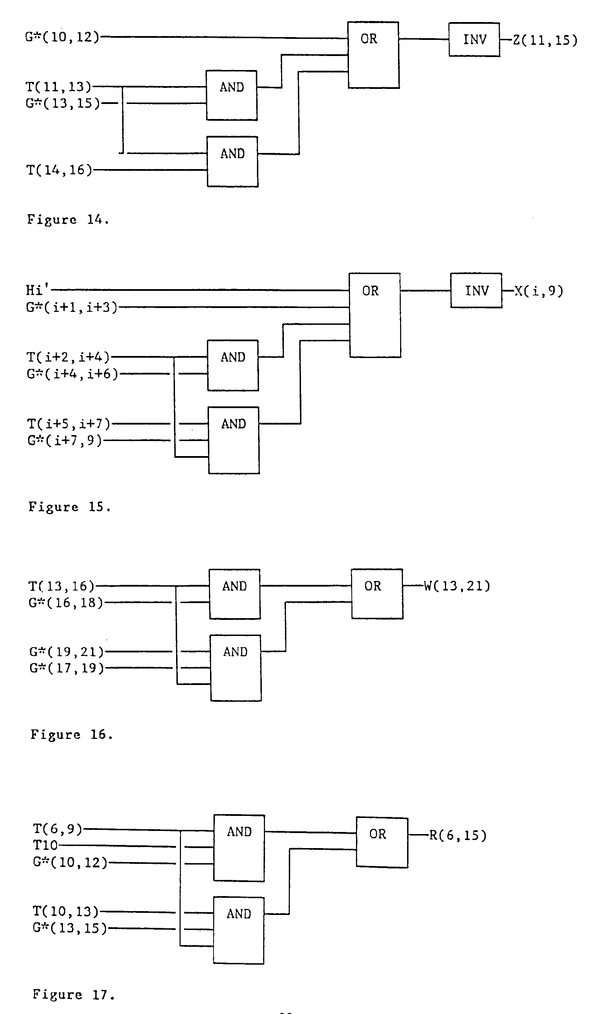

Figs. 8 - 20 refer to equations discussed hereinbelow that describe the critical path of $SUM_0$, and by extension, every other path. This demonstrates the design of an adder of three logic stages with the use of a maximum 3 X 8 AND-OR book. The diagrams represent the design of the present invention with simple gates that can be transformed to appropriate more complex books by any person skilled in the art of computer system design.

Referring now also to Fig. 8, circuits are described that are necessary to compute the following Boolean described equations:

$$T_{(i,i + 3)} = (A_{(i)} + B_{(i)})(A_{(i + 1)} + B_{(i + 1)})(A_{(i + 2)} + B_{(i + 2)}) + (A_{(i + 3)} + B_{(i + 3)})$$
$$T_{(i)} = A_{(i)} + B_{(i)}$$
$$T_{(i,i + 1)} = (A_{(i)} + B_{(i)})(A_{(i + 1)} + B_{(i + 1)})$$
$$T_{(i,i + 2)} = (A_{(i)} + B_{(i)})(A_{(i + 1)} + B_{(i + 1)})(A_{(i + 2)} + B_{(i + 2)})$$

Referring now also to Fig. 9, the following Boolean expressions are described:

$$G^*{}_{(i)} = A_{(i)}B_{(i)}$$
$$G^*{}_{(i,i + 1)} = A_{(i)}B_{(i)} + A_{(i + 1)}B_{(i + 1)}$$
$$G^*{}_{(i,i + 2)} = A_{(i)}B_{(i)} + A_{(i + 1)}B_{(i + 1)} + A_{(i + 1)}A_{(i + 2)}B_{(i + 2)} + B_{(i + 1)}A_{(i + 2)}B_{(i + 2)}$$

Referring now also to Fig. 10, the Boolean expression for the production of $PS_{30}$ and its complement is described. The complement has been produced by the negation of the $PS_{30}$ and if implemented that way the logic stages will be increased. Also, similar freedoms have been allowed in other places including the two previous Figs. This facilitates comprehension and diminishes the complexity of the Figs.

The Boolean expression for $PS_{30}$ is:

$$PS_{(30)} = A_{(30)}B_{(30)} + A_{(31)}B_{(31)} + A_{(31)}Cin + B_{(31)}Cin$$

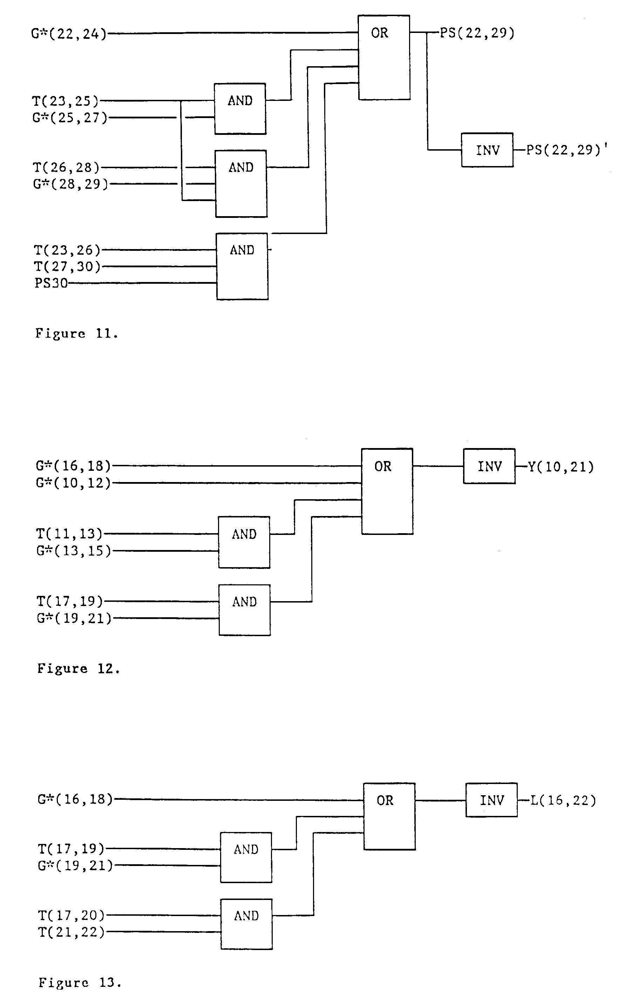

Referring now also to Fig. 11, circuitry for $PS_{(22,29)}$ and its complement is computed as follows:

$$PS_{(22,29)} = G^*{}_{(22,24)} + T_{(23,25)}G^*{}_{(25,27)} + T_{(23,25)}T_{(26,28)}G^*{}_{(28,29)} + T_{(23,26)}T_{(27,30)}PS_{(30)}$$

Figs. 12-18 compute the Boolean expressions that calculate the auxiliary function, and described as shown hereinbelow.

$$Q_{(i,5)} = H_{(i)}{}'T_{(i + 1)}T_{(i + 2,5)} + H_{(i)}T_{(i + 1)}{}'T_{(i + 2,5)}R_{(6,15)}$$
$$= T_{(6,10)}G^*{}_{(10,15)}$$
$$= T_{(6,9)}T_{(10)}G^*{}_{(10,12)} + T_{(6,9)}T_{(10,13)}G^*{}_{(13,15)}$$
$$W_{(13,21)} = T_{(13,16)}G^*{}_{(16,21)}$$
$$= T_{(13,16)}G^*{}_{(16,18)} + T_{(13,16)}G^*{}_{(17,19)}G^*{}_{(19,21)}$$
$$X_{(i,9)} = (H_{(i)}{}' + G^*{}_{(i + 1,i + 3)} + T_{(i + 2,i + 4)}G^*{}_{(i + 4,i + 6)} + T_{(i + 2,i + 4)}T_{(i + 5,i + 7)}G^*{}_{(i + 7,9)})'$$
$$Z_{(11,15)} = (T_{(11,13)}T_{(14,16)} + G^*{}_{(10,12)} + T_{(11,13)}G^*{}_{(13,15)})'$$
$$L_{(16,22)} = (G^*{}_{(16,18)} + T_{(17,19)}G^*{}_{(19,21)} + T_{(17,20)}T_{(21,22)})'$$
$$Y_{(10,21)} = (G^*{}_{(10,12)} + T_{(11,13)}G^*{}_{(13,15)} + G^*{}_{(16,18)} + T_{(17,19)}G^*{}_{(19,21)})'$$

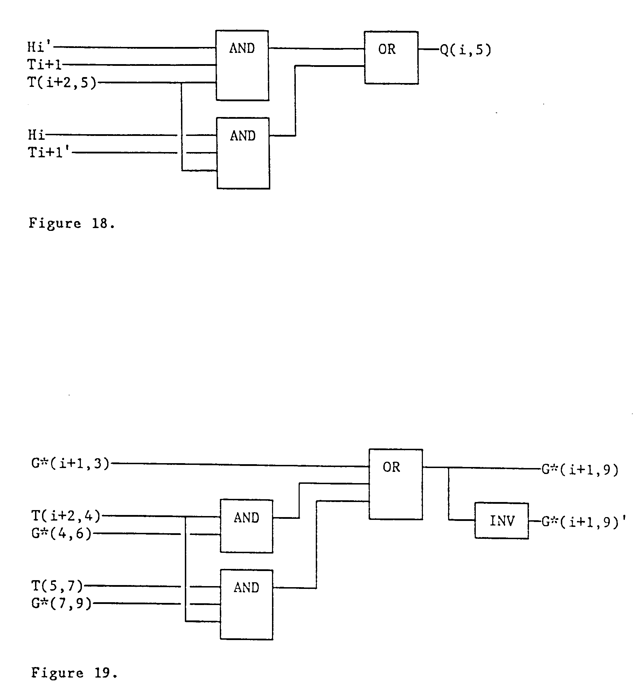

Referring now also to Fig. 19, the Boolean expression is described that computes the pseudo generate signal for i = 0:

$$G^*{}_{(i + 1,9)} = G^*{}_{(i + 1,3)} + T_{(i + 2,4)}G^*{}_{(4,6)} + T_{(i + 2,4)}T_{(5,7)}G^*{}_{(7,9)}$$

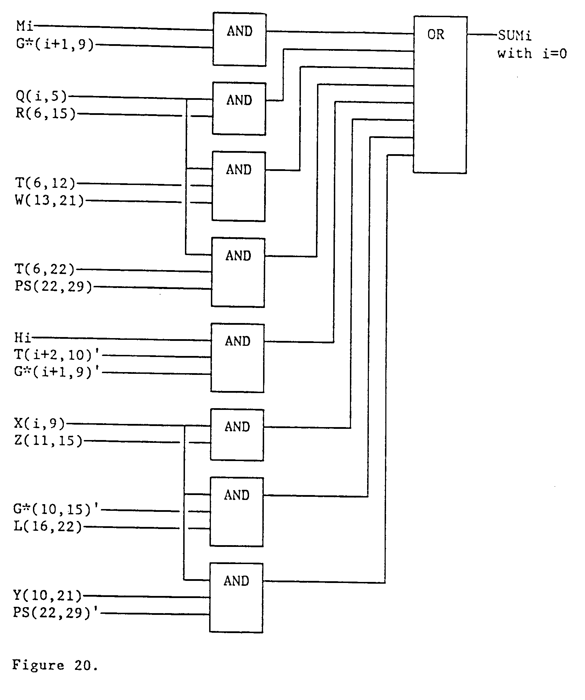

Referring now also to Fig. 20, the computation of $SUM_i$, with i belonging to the critical sum is described.

For i=0 then:

$$SUM_{(i)} = M_{(i)}G^*{}_{(i + 1,9)} + Q_{(i,5)}R_{(6,15)} + Q_{(i,5)}T_{(6,12)}W_{(13,21)} + Q_{(i,5)}T_{(6,22)}PS_{(22,29)} + H_{(i)}T_{(i + 2,10)}{}'G^*{}_{(i + 1,9)}{}' + X_{(i,9)}Z_{(11,15)}$$
$$+ X_{(i,9)}G^*{}_{(10,15)}{}'L_{(16,22)} + X_{(i,9)}Y_{(10,21)}PS_{(22,29)}{}'$$

## The Implementation

For the following section, notational conventions are as follows:

1) ' is the inverse or NOT of the expression
2) (a + b) is "a" logical OR "b"
3) (ab) is "a" logical AND "b"

The critical path of the three stage adder is described as follows. The SUM of bit 0 requires maximum add time. That is, it lies on the critical path. Therefore, the design of $SUM_0$ dictates the maximum delay of the adder implementation. By applying corollary 3, $SUM_0$ can be expressed as follows:

For i=0,

$$SUM_i = M_{(i)}G^*{}_{(i+1,9)} + M_{(i)}T_{(i+2,10)}G^*{}_{(10,15)} + M_{(i)}T_{(i+2,16)}G^*{}_{(16,21)} + M_{(i)}T_{(i+2,22)}PS_{(22,29)} + H_{(i)}T_{(i+2,10)}{}'G^*{}_{(i+1,9)}{}'$$
$$+ H_{(i)}G^*{}_{(i+1,9)}{}'T_{(11,16)}{}'G^*{}_{(10,15)}{}' + H_{(i)}G^*{}_{(i+1,9)}{}'G^*{}_{(10,15)}{}'G^*{}_{(16,21)}{}'T_{(17,22)}{}' + H_{(i)}G^*{}_{(i+1,9)}{}'G^*{}_{(10,15)}{}'G^*{}_{(16,21)}{}'PS_{(22,29)}{}'$$

It is obvious that the $SUM_0$ as described previously cannot be implemented in one stage by using a 3 x 8 AND-OR book. However it can be rewritten as follows for i=0:

$$SUM_i = M_{(i)}G^*_{(i+1,9)} + Q_{(i,5)}R_{(6,15)} + Q_{(i,5)}T_{(6,12)}W_{(13,21)} + Q_{(i,5)}T_{(6,22)}PS_{(22,29)} + H_{(i)}T_{(i+2,10)}'G^*_{(i+1,9)}' + X_{(i,9)}Z_{(11,15)}$$
$$+ X_{(i,9)}G^*_{(10,15)}'L_{(16,22)} + X_{(i,9)}Y_{(10,21)}PS_{(22,29)}'$$

With:

$$Q_{(i,5)} = M_{(i)}T_{(i+2,5)}$$
$$R_{(6,15)} = T_{(6,10)}G^*_{(10,15)}$$
$$W_{(13,21)} = T_{(13,16)}G^*_{(16,21)}$$
$$X_{(i,9)} = H_{(i)}G^*_{(i+1,9)}'$$
$$Z_{(11,15)} = T_{(11,16)}'G^*_{(10,15)}'$$
$$L_{(16,22)} = G^*_{(16,21)}'T_{(17,22)}'$$
$$Y_{(10,21)} = G^*_{(10,15)}'G^*_{(16,21)}'$$

The transformed $SUM_0$ can be implemented in one stage in a 3 x 8 AND-OR book, assuming that all quantities included in the equations have been implemented previously.

Such quantities can be re-written as follows for i=0:

$$G^*_{(i+1,9)} = G^*_{(i+1,3)} + T_{(i+2,4)}G^*_{(4,6)} + T_{(i+2,4)}T_{(5,7)}G^*_{(7,9)}$$
$$G^*_{(i+1,9)}' = (G^*_{(i+1,3)} + T_{(i+2,4)}G^*_{(4,6)} + T_{(i+2,4)}T_{(5,7)}G^*_{(7,9)})'$$
$$M_{(i)} = H_{(i)}'T_{(i+1)} + H_{(i)}T_{(i+1)}'$$
$$Q_{(i,5)} = H_{(i)}'T_{(i+1)}T_{(i+2,5)} + H_{(i)}T_{(i+1)}'T_{(i+2,5)}$$
$$R_{(6,15)} = T_{(6,10)}G^*_{(10,15)}$$
$$= T_{(6,9)}T_{(10)}G^*_{(10,12)} + T_{(6,9)}T_{(10,13)}G^*_{(13,15)}$$
$$W_{(13,21)} = T_{(13,16)}G^*_{(16,21)} = T_{(13,16)}G^*_{(16,18)} + T_{(13,16)}G^*_{(17,19)}G^*_{(19,21)}$$
$$X_{(i,9)} = (H_{(i)}' + G^*_{(i+1,i+3)} + T_{(i+2,i+4)}G^*_{(i+4,i+6)} + T_{(i+2,i+4)}T_{(i+5,i+7)}G^*_{(i+7,9)})'$$
$$Z_{(11,15)} = (T_{(11,13)}T_{(14,16)} + G^*_{(10,12)} + T_{(11,13)}G^*_{(13,15)})'$$
$$L_{(16,22)} = (G^*_{(16,18)} + T_{(17,19)}G^*_{(19,21)} + T_{(17,20)}T_{(21,22)})'$$
$$Y_{(10,21)} = (G^*_{(10,12)} + T_{(11,13)}G^*_{(13,15)} + G^*_{(16,18)} + T_{(17,19)}G^*_{(19,21)})'$$
$$PS_{(22,29)} = G^*_{(22,24)} + T_{(23,25)}G^*_{(25,27)} + T_{(23,25)}T_{(26,28)}G^*_{(28,29)} + T_{(23,26)}T_{(27,30)}PS_{(30)}$$
$$PS_{(22,29)}' = (G^*_{(22,24)} + T_{(23,25)}G^*_{(25,27)} + T_{(23,25)}T_{(26,28)}G^*_{(28,29)} + T_{(23,26)}T_{(27,30)}PS_{(30)})'$$

In addition to those quantities, group transmit signals and their complements must be implemented. However, such implementation is not critical since they can be computed by AND and NAND logic. Also, the group pseudo generates ($G^*$) must be implemented. However, the groups involved are smaller than $G^*_{(i+1,9)}$. Therefore, smaller books, or books the same size as those used for $G^*_{(i+1,9)}$ are required for implementation.

The previous equations can be computed in one stage in a 3 x 8 AND-OR book, assuming that all quantities included in the equations have been implemented previously.

Such quantities can be expressed as follows:

$$T_{(i,i+3)} = (A_{(i)} + B_{(i)})(A_{(i+1)} + B_{(i+1)})(A_{(i+2)} + B_{(i+2)})(A_{(i+3)} + B_{(i+3)})$$
$$T_{(i)} = A_{(i)} + B_{(i)}$$
$$T_{(i,i+1)} = (A_{(i)} + B_{(i)})(A_{(i+1)} + B_{(i+1)})$$
$$T_{(i,i+2)} = (A_{(i)} + B_{(i)})(A_{(i+1)} + B_{(i+1)})(A_{(i+2)} + B_{(i+2)})$$
$$G^*_{(i)} = A_{(i)}B_{(i)}$$
$$G^*_{(i,i+1)} = A_{(i)}B_{(i)} + A_{(i+1)}B_{(i+1)}$$
$$G^*_{(i,i+2)} = A_{(i)}B_{(i)} + A_{(i+1)}B_{(i+1)} + A_{(i+1)}A_{(i+2)}B_{(i+2)} + B_{(i+1)}A_{(i+2)}B_{(i+2)}$$
$$PS_{(30)} = A_{(30)}B_{(30)} + A_{(31)}B_{(31)} + A_{(31)}Cin + B_{(31)}Cin$$
$$PS_{(30)}' = (A_{(30)}B_{(30)} + A_{(31)}B_{(31)} + A_{(31)}Cin + B_{(34)}Cin)'$$
$$H_{(i)} = A_{(i)}'B_{(i)} + A_{(i)}B_{(i)}' \text{ for all i}$$
$$H_{(i)}' = (A_{(i)}'B_{(i)} + A_{(i)}B_{(i)}')' \text{ for all i}$$
$$Cin' = (Cin)'$$

All of the previous quantities can be implemented, as needed, from the primary inputs to the adder. Therefore, three stages are needed to produce $SUM_0$ and, consequently, all other sums of the 32-bit adder.

## Claims

1. A method of adding in a digital computer operands A, B, each having a predetermined length, and obtaining a result, characterized by the following steps:

    a) generating a plurality of different pseudo signals including pseudo generate, pseudo transmit, pseudo half sum, and pseudo transmit half sum signals,

    b) generating a new-carry signal described by a recursive equation based on said pseudo generate and pseudo transmit signals,

c) generating a sum signal described by a recursive sum equation as a function of said pseudo signals and said new-carry signals,

whereby said pseudo generate signal from bit i to bit m, $G^*_{(i,m)}$, with $i \leq m$, is described by the following Boolean expression:

$$G^*_{(i,m)} = 0 \qquad \text{if } i > n;$$

and

$$G^*_{(i,m)} = G_i + G_{i+1} + T_{i+1}G_{i+2} + T_{i+1}T_{i+2}G_{i+3} + \ldots + T_{i+1}T_{i+2}T_{i+3}\ldots T_{m-1}G_m \qquad \text{if } i \leq n,$$

wherein $G_i = A_iB_i$, $T_i = A_i + B_i$ and $A_i$, $B_i$ are the ith bits of said operands A, B, respectively, i is an integer and n is the least significant bit position and wherein bit position i is less significant than bit position i-1 and more significant than bit position i+1,

said pseudo transmit signal from bit i to bit m, $T_{(i,m)}$, with $i \leq m$, is described by the following Boolean expression:

$$T_{(i,m)} = 1 \qquad \text{if } i > n;$$

and

$$T_{(i,m)} = T_iT_{i+1}T_{i+2}\ldots T_{m-1}T_m \qquad \text{if } i \leq n,$$

said pseudo half sum for bit i, $H_i$, is described by the following Boolean expression:

$$H_i = | \qquad \text{if } i > n$$
$$H_i = A_i \lor B_i \qquad \text{if } i \leq n,$$

said pseudo transmit half sum for bit i, $M_i$, is described by the following Boolean expression:

$$M_i = | \qquad \text{if } H_i = |$$
$$M_i = H_i \lor T_{i+1} \qquad \text{if } H_i \neq |,$$

said new carry from bit i to bit m, $PS_{(i,m)}$, with $i \leq m$, is described by the following Boolean expression,

$$PS_{(i,m)} = Cin \qquad \text{if } i > n$$
$$PS_{(i,m)} = G^*_{(i,m)} + T_{(i+1,m+1)}PS_{(m+1,z)} \qquad \text{if } i \leq n,$$

z being some natural number such that m < z,

and said recursive sum equation, $SUM_{i-1}$, obeys the following Boolean expression:

$$SUM_{i-1} = M_{i-1}PS_{(i,m)} + H_{i-1}PS_{(i,m)}'.$$

2. The method of adding in accordance with claim 1, characterized in that said recursive SUM equation, $SUM_{i-1}$, obeys the following Boolean expression:

$$SUM_{i-1} = M_{i-1}G^*_{(i,m)} + M_{i-1}T_{(i+1,m+1)}PS_{(m+1,z)} + H_{i-1}T_{(i+1,m+1)}'G^*_{(i,m)}' + H_{i-1}G^*_{(i,m)}'PS_{(m+1,z)}'.$$

3. The method of adding in accordance with claim 1, characterized in that said recursive SUM equation, $SUM_{i-1}$, obeys the following Boolean expression:

$$SUM_{i-1} = M_{i-1}G^*_{(i,m)} + M_{i-1}T_{(i+1,m+1)}G^*_{(m+1,z)} + M_{i-1}T_{(i+1,z+1)}PS_{(z+1,k)} + H_{i-1}T_{(i+1,m+1)}'G^*_{(i,m)}' + H_{i-1}G^*_{(i,m)}'T_{(m+2,z+1)}'G^*_{(m+1,z)}' + H_{i-1}G^*_{(i,m)}'G^*_{(m+1,z)}'PS_{(z+1,k)}'.$$

4. The method of adding in accordance with one of the claims 1 to 3, characterized in that recurrences of new-carry equations are removed until said new-carry equations equal the carry into said addition, resulting in a plurality of SUM expressions.

5. A high-speed adder having multiple logic stages for adding two operands A, B each having a predetermined length, characterized by

a first stage of logic circuits (Fig. 1, 2 and 4) producing from selected portions of said operands a plurality of pseudo signals including pseudo generate, pseudo transmit, pseudo half sum, and pseudo transmit half sum signals,

a second stage of logic circuits (Fig. 3) producing from the outputs of said first stage a new-carry signal and different auxiliary signals, and

a third stage of logic circuits (Fig. 5 to 7) producing from the outputs of said first and second stages a sum signal,

said first stage producing a pseudo generate signal from bit i to bit m, $G^*_{(i,m)}$, with $i \leq m$, according to the following Boolean expressions:

$$G^*_{(i,m)} = 0 \qquad \text{if } i > n;$$

and

$$G^*_{(i,m)} = G_i + G_{i+1} + T_{i+1}G_{i+2} + T_{i+1}T_{i+2}G_{i+3} + \ldots + T_{i+1}T_{i+2}T_{i+3}\ldots T_{m-1}G_m \qquad \text{if } i \leq n,$$

wherein $G_i = A_iB_i$, $T_i = A_i + B_i$ and $A_i$, $B_i$ are the ith bits of said operands A, B, respectively, i is an integer and n is the least significant bit position and wherein bit position i is less significant than bit position i-1 and more significant than bit position i+1,

said first stage producing a pseudo transmit signal from bit i to bit m, $T_{(i,m)}$, with $i \leqq m$, according to the following Boolean expression:

$$T_{(i,m)} = 1 \qquad \text{if } i > n;$$

and

$$T_{(i,m)} = T_i T_{i+1} T_{i+2} \ldots T_{m-1} T_m \qquad \text{if } i \leqq n,$$

said first stage producing a pseudo half sum signal for bit i, $H_i$, according to the following Boolean expression:

$$H_i = | \qquad \text{if } i > n$$
$$H_i = A_i \lor B_i \qquad \text{if } i \leqq n,$$

said first stage further producing a pseudo transmit half sum signal for bit i, $M_i$, according to the following Boolean expression:

$$M_i = | \qquad \text{if } H_i = |$$
$$M_i = H_i \lor T_{i+1} \qquad \text{if } H_i \neq |,$$

said second stage producing a new carry signal from bit i to bit m, $PS_{(i,m)}$, with $i \leqq m$, according to the following Boolean expression,

$$PS_{(i,m)} = Cin \qquad \text{if } i > n$$
$$PS_{(i,m)} = G^*_{(i,m)} + T_{(i+1,m+1)} PS_{(m+1,z)} \qquad \text{if } i \leqq n,$$

z being some natural number such that $m < z$,

and said third stage producing a sum signal $SUM_{i-1}$ according to the following Boolean expression:

$$SUM_{i-1} = M_{i-1} PS_{(i,m)} + H_{i-1} PS_{(i,m)}'.$$

6. The adder in accordance with claim 5, characterized in that said predetermined length is 32 bits.

7. The adder in accordance with claim 5 or 6, characterized by AND-OR books having a size not greater than 3 x 8, whereby a book comprises one or more cells, said cells comprising logical devices capable of performing Boolean expressions, and whereby a size of 3 x 8 indicates a configuration consisting of a 3-way AND-gate and an 8-way OR-gate.

8. The adder in accordance with one of the claims 5 to 7, characterized in that a recursive SUM equation, $SUM_{i-1}$, obeys the following Boolean expression (Fig. 6):
$$SUM_{i-1} = M_{i-1} G^*_{(i,m)} + M_{i-1} T_{(i+1,m+1)} PS_{(m+1,z)} + H_{i-1} T_{(i+1,m+1)}' G^*_{(i,m)}' + H_{i-1} G^*_{(i,m)}' PS_{(m+1,z)}'.$$

9. The adder in accordance with one of the claims 5 to 7, characterized in that a recursive SUM equation, $SUM_{i-1}$, obeys the following Boolean expression (Fig. 7):
$$SUM_{i-1} = M_{i-1} G^*_{(i,m)} + M_{i-1} T_{(i+1,m+1)} G^*_{(m+1,z)} + M_{i-1} T_{(i+1,z+1)} PS_{(z+1,k)} + H_{i-1}$$
$$T_{(i+1,m+1)}' G^*_{(i,m)}' + H_{i-1} G^*_{(i,m)}' T_{(m+2,z+1)}' G^*_{(m+1,z)}' + H_{i-1} G^*_{(i,m)}' G^*_{(m+1,z)}' PS_{(z+1,k)}'.$$

10. The adder in accordance with one of the claims 5 to 7, characterized by a critical SUM equation implementing the following Boolean expression for i=0 (Fig. 20):
$$SUM_{(i)} = M_{(i)} G^*_{(i+1,9)} + Q_{(i,5)} R_{(6,15)} + Q_{(i,5)} T_{(6,12)} W_{(13,21)} + Q_{(i,5)} T_{(6,22)} PS_{(22,29)} + H_{(i)}$$
$$T_{(i+2,10)}' G^*_{(i+1,9)}' + X_{(i,9)} Z_{(11,15)} + X_{(i,9)} G^*_{(10,15)}' L_{(16,22)} + X_{(i,9)} Y_{(10,21)} PS_{(22,29)}'$$

with:

$$Q_{(i,5)} = M_{(i)} T_{(i+2,5)}$$
$$R_{(6,15)} = T_{(6,10)} G^*_{(10,15)}$$
$$W_{(13,21)} = T_{(13,16)} G^*_{(16,21)}$$
$$X_{(i,9)} = H_{(i)} G^*_{(i+1,9)}'$$
$$Z_{(11,15)} = T_{(11,16)}' G^*_{(10,15)}'$$
$$L_{(16,22)} = G^*_{(16,21)}' T_{(17,22)}'$$
$$Y_{(10,21)} = G^*_{(10,15)}' G^*_{(16,21)}'.$$

11. The adder in accordance with one of the claims 5 to 10, characterized by a critical SUM equation for any of the bits 1-31 properly extending from said 1=0 critical SUM equation and in accordance with said recursive SUM equations.

12. The adder in accordance with one of the claims 5 to 11, characterized in that pseudo quantities and their complements obey the following Boolean expression for i=0 (Fig. 19):
$$G^*_{(i+1,9)} = G^*_{(i+1,3)} + T_{(i+2,4)} G^*_{(4,6)} + T_{(i+2,4)} T_{(5,7)} G^*_{(7,9)}$$

$$G^*_{(i+1,9)}{}' = (G^*_{(i+1,3)} + T_{(i+2,4)}G^*_{(4,6)} + T_{(i+2,4)}T_{(5,7)}G^*_{(7,9)})'.$$

13. The adder in accordance with one of the claims 5 to 12, characterized in that auxiliary functions are defined by the following Boolean expressions (Fig. 12 to 18):

$$Q_{(i,5)} = H_{(i)}{}'T_{(i+1)}T_{(i+2,5)} + H_{(i)}T_{(i+1)}{}'T_{(i+2,5)}$$
$$R_{(6,15)} = T_{(6,10)}G^*_{(10,15)} = T_{(6,9)}T_{(10)}G^*_{(10,12)} + T_{(6,9)}T_{(10,13)}G^*_{(13,15)}$$
$$W_{(13,21)} = T_{(13,16)}G^*_{(16,21)} = T_{(13,16)}G^*_{(16,18)} + T_{(13,16)}G^*_{(17,19)}G^*_{(19,21)}$$
$$X_{(i,9)} = (H_{(i)}{}' + G^*_{(i+1,i+3)} + T_{(i+2,i+4)}G^*_{(i+4,i+6)} + T_{(i+2,i+4)}T_{(i+5,i+7)}G^*_{(i+7,9)})'$$
$$Z_{(11,15)} = (T_{(11,13)}T_{(14,16)} + G^*_{(10,12)} + T_{(11,13)}G^*_{(13,15)})'$$
$$L_{(16,22)} = (G^*_{(16,18)} + T_{(17,19)}G^*_{(19,21)} + T_{(17,20)}T_{(21,22)})'$$
$$Y_{(10,21)} = (G^*_{(10,12)} + T_{(11,13)}G^*_{(13,15)} + G^*_{(16,18)} + T_{(17,19)}G^*_{(19,21)})'.$$

14. The adder in accordance with one of the claims 5 to 13, characterized in that a new-carry equation for bit 22 and its complement are defined by the following Boolean expressions (Fig. 11):

$$PS_{(22,29)} = G^*_{(22,24)} + T_{(23,25)}G^*_{(25,27)} + T_{(23,25)}T_{(26,28)}G^*_{(28,29)} + T_{(23,26)}T_{(27,30)}PS_{(30)}$$
$$PS_{(22,29)}{}' = (G^*_{(22,24)} + T_{(23,25)}G^*_{(25,27)} + T_{(23,25)}T_{(26,28)}G^*_{(28,29)} + T_{(23,26)}T_{(27,30)}PS_{(30)})'.$$

15. The adder in accordance with one of the claims 5 to 14, characterized in that a pseudo transmit signal for bit groups from 1 to 3 is defined by the following Boolean expressions (Fig. 8):

$$T_{(i,i+3)} = (A_{(i)} + B_{(i)})(A_{(i+1)} + B_{(i+1)})(A_{(i+2)} + B_{(i+2)})(A_{(i+3)} + B_{(i+3)})$$
$$T_{(i)} = A_{(i)} + B_{(i)}$$
$$T_{(i,i+1)} = (A_{(i)} + B_{(i)})(A_{(i+1)} + B_{(i+1)})$$
$$T_{(i,i+2)} = (A_{(i)} + B_{(i)})(A_{(i+1)} + B_{(i+1)})(A_{(i+2)} + B_{(i+2)}).$$

16. The adder in accordance with one of the claims 5 to 15, characterized in that a pseudo generate signal for bit groups 1 to 2 is defined by the following Boolean expressions (Fig. 9):

$$G^*_{(i)} = A_{(i)}B_{(i)}$$
$$G^*_{(i,i+1)} = A_{(i)}B_{(i)} + A_{(i+1)}B_{(i+1)}$$
$$G^*_{(i,i+2)} = A_{(i)}B_{(i)} + A_{(i+1)}B_{(i+1)} + A_{(i+1)}A_{(i+2)}B_{(i+2)} + B_{(i+1)}A_{(i+2)}B_{(i+2)}.$$

17. The adder in accordance with one of the claims 5 to 16, characterized in that a new-carry equation for bit 30 and its complement are defined by the following Boolean expressions (Fig. 10):

$$PS_{(30)} = A_{(30)}B_{(30)} + A_{(31)}B_{(31)} + A_{(31)}Cin + B_{(31)}Cin$$
$$PS_{(30)}{}' = (A_{(30)}B_{(30)} + A_{(31)}B_{(31)} + A_{(31)}Cin + B_{(31)}Cin)'.$$

## Patentansprüche

1. Additionsverfahren eines digitalen Computers zur Addition von Operanden A, B, von denen jeder eine vorgegebene Länge besitzt, zur Berechnung eines Ergebnisses, gekennzeichnet durch die folgenden Schritte:

a) Erzeugen einer Vielzahl unterschiedlicher Pseudosignale, einschließlich von Pseudo-Erzeugungs-, Pseudo-Weitergabe-, Pseudo-Halbsummen und Pseudo-Halbsummen-Weitergabesignalen,

b) Erzeugen eines Neuer-Übertragssignals, das durch eine rekursive Gleichung auf der Basis der Pseudo-Erzeugungs- und Pseudo-Weitergabesignale beschrieben wird,

c) Erzeugen eines Summensignals, das durch eine rekursive SUM-Gleichung als Funktion der Pseudosignale und des Neuer-Übertragssignales beschrieben wird,

wobei das Pseudo-Erzeugungssignal von Bit i bis Bit m, $G^*_{(i,m)}$ mit $i \leq m$ durch den folgenden Booleschen Ausdruck beschrieben wird:

$$G^*_{(i,m)} = 0 \qquad \text{wenn } i > n;$$

und

$$G^*_{(i,m)} = G_i + G_{i+1} + T_{i+1}G_{i+2} + T_{i+1}T_{i+2}G_{i+3} + \ldots + T_{i+1}T_{i+2}T_{i+3} \ldots T_{m-1}G_m \qquad \text{wenn } i \leq n,$$

worin $G_i = A_iB_i$, $T_i = A_i + B_i$ und $A_i$, $B_i$ die i-ten Bits der Operanden A beziehungsweise B sind, i eine ganze Zahl ist und n die niederwertigste Bitposition ist und worin Bitposition i niederwertiger ist als die Bitposition i-1 und höherwertiger als die Bitposition i+1,

das Pseudo-Weitergabesignal von Bit i nach Bit m, $T_{(i,m)}$, mit $i \leq m$ wird durch den folgenden Booleschen Ausdruck beschrieben:

$$T_{(i,m)} = 1 \qquad \text{wenn } i > n;$$

18

und
$$T_{(i,m)} = T_i T_{i+1} T_{i+2} \ldots T_{m-1} T_m \qquad \text{wenn } i \leq n,$$
die Pseudo-Halbsumme für Bit i, $H_i$, wird durch den folgenden Booleschen Ausdruck beschrieben:
$$H_i = | \qquad \text{wenn } i > n;$$

und
$$H_i = A_i \vee B_i \qquad \text{wenn } i \leq n,$$
die Pseudo-Halbsummen-Weitergabe für Bit i, $M_i$, wird durch den folgenden Booleschen Ausdruck beschrieben:
$$M_i = | \qquad \text{wenn } H_i = |$$
$$M_i = H_i \vee T_{i+1} \qquad \text{wenn } H_i \neq |,$$
das Neuer-Übertragssignal von Bit i auf Bit m, $PS_{(i,m)}$, mit $i \leq m$ wird durch den folgenden Booleschen Ausdruck beschrieben:
$$PS_{(i,m)} = Cin \qquad \text{wenn } i > n$$
$$PS_{(i,m)} = G^*_{(i,m)} + T_{(i+1,m+1)} PS_{(m+1,z)} \qquad \text{wenn } i \leq n,$$
wobei z eine Natürliche Zahl mit $m < z$ ist
und die rekursive SUM-Gleichung, $SUM_{i-1}$, folgt dem folgenden Booleschen Ausdruck:
$$SUM_{i-1} = M_{i-1} PS_{(i,m)} + H_{i-1} PS_{(i,m)}'.$$

**2.** Additionsverfahren nach Anspruch 1, dadurch gekennzeichnet, daß die rekursive SUM-Gleichung, $SUM_{i-1}$, dem folgenden Booleschen Ausdruck folgt:
$$SUM_{i-1} = M_{i-1} G^*_{(i,m)} + M_{i-1} T_{(i+1,m+1)} PS_{(m+1,z)} + H_{i-1} T_{(i+1,m+1)}' G^*_{(i,m)}' + H_{i-1}$$
$$G^*_{(i,m)}' PS_{(m+1,z)}'.$$

**3.** Additionsverfahren nach Anspruch 1, dadurch gekennzeichnet, daß die rekursive SUM-Gleichung, $SUM_{i-1}$, dem folgenden Booleschen Ausdruck folgt:
$$SUM_{i-1} = M_{i-1} G^*_{(i,m)} + M_{i-1} T_{(i+1,m+1)} G^*_{(m+1,z)} + M_{i-1} T_{(i+1,z+1)} PS_{(z+1,k)} + H_{i-1}$$
$$T_{(i+1,m+1)}' G^*_{(i,m)}' + H_{i-1} G^*_{(i,m)}' T_{(m+2,z+1)}' G^*_{(m+1,z)}' + H_{i-1} G^*_{(i,m)}' G^*_{(m+1,z)}' PS_{(z+1,k)}.$$

**4.** Additionsverfahren nach einem der Ansprüche 1 bis 3, dadurch gekennzeichnet, daß die Rekursionen der Neuer-Übertragsgleichungen solange weggelassen werden, bis die Neuer-Übertragsgleichungen, die den Übertrag in die Addition bilden, zu einer Vielzahl von Sum-Ausdrücken führen.

**5.** Hochgeschwindigkeitsaddierer mit einer Vielzahl logischer Stufen zur Addition von Operanden A, B, von denen jeder eine vorgegebene Länge besitzt, dadurch gekennzeichnet, daß
eine erste Stufe logischer Schaltungen (Fig. 1, 2 und 4) aus ausgewählten Abschnitten der Operanden eine Vielzahl Pseudosignale erzeugt, einschließlich von Pseudo-Erzeugungs-, Pseudo-Weitergabe-, Pseudo-Halbsummen- und Pseudo-Halbsummen-Weitergabesignalen,
eine zweite Stufe logischer Schaltungen (Fig. 3) aus den Ausgangssignalen der ersten Stufe ein Neuer-Übertragssignal und verschiedene Hilfssignale erzeugt und
eine dritte Stufe logischer Schaltungen (Fig. 5 bis 7) aus den Ausgangssignalen der ersten und zweiten Stufe ein Summensignal erzeugt,
die erste Stufe ein Pseudo-Erzeugungssignal von Bit i nach Bit m, $G^*_{(i,m)}$, mit $i \leq m$ nach folgenden Booleschen Ausdrücken erzeugt:
$$G^*_{(i,m)} = 0 \qquad \text{wenn } i > n;$$

und
$$G^*_{(i,m)} = G_i + G_{i+1} + T_{i+1} G_{i+2} + T_{i+1} T_{i+2} G_{i+3} + \ldots + T_{i+1} T_{i+2} T_{i+3} \ldots T_{m-1} G_m \qquad \text{wenn } i \leq n,$$
worin $G_i = A_i B_i$, $T_i = A_i + B_i$ und $A_i$, $B_i$ die i-ten Bits der Operanden A beziehungsweise B sind, i eine ganze Zahl ist und n die niederwertigste Bitposition ist und worin Bitposition i niederwertiger ist als die Bitposition i-1 und höherwertiger als die Bitposition i+1,
die erste Stufe ein Pseudo-Weitergabesignal von Bit i nach Bit m, $T_{(i,m)}$ mit $i \leq m$ nach folgendem Booleschen Ausdruck erzeugt:
$$T_{(i,m)} = 1 \qquad \text{wenn } i > n;$$

und
$$T_{(i,m)} = T_i T_{i+1} T_{i+2} \ldots T_{m-1} T_m \qquad \text{wenn } i \leq n,$$
die erste Stufe ein Pseudo-Halbsummen-Signal für Bit i, $H_i$, nach folgendem Booleschen Ausdruck erzeugt:
$$H_i = | \qquad \text{wenn } i > n;$$

und

$$H_i = A_i \lor B_i \qquad \text{wenn } i \leqq n,$$

die erste Stufe desweiteren ein Pseudo-Halbsummen-Weitergabesignal für Bit i, $M_i$, nach folgendem Booleschen Ausdruck erzeugt:

$$M_i = | \qquad \text{wenn } H_i = |$$
$$M_i = H_i \lor T_{i+1} \qquad \text{wenn } H_i \neq |,$$

die zweite Stufe ein Neuer-Übertragssignal von Bit i auf Bit m, $PS_{(i,m)}$ mit $i \leqq m$ nach folgendem Booleschen Ausdruck erzeugt:

$$PS_{(i,m)} = Cin \qquad \text{wenn } i > n$$
$$PS_{(i,m)} = G^*_{(i,m)} + T_{(i+1,m+1)} PS_{(m+1,z)} \qquad \text{wenn } i \leqq n,$$

wobei z eine Natürliche Zahl mit m < z ist
und daß die dritte Stufe ein Summensignal, $SUM_{i-1}$, nach folgendem Booleschen Ausdruck erzeugt:

$$SUM_{i-1} = M_{i-1} PS_{(i,m)} + H_{i-1} PS_{(i,m)}'.$$

6. Addierer nach Anspruch 5, dadurch gekennzeichnet, daß die vorgegebene Länge 32 Bits beträgt.

7. Addierer nach einem der Ansprüche 5 oder 6, gekennzeichnet durch UND-ODER-Gatterfelder, welche eine Größe haben, nicht größer als 3 x 8, wobei ein Gatterfeld eine oder mehrere Zellen umfaßt und diese Zellen logische Elemente enthalten, die in der Lage sind, Boolesche Verknüpfungen zu realisieren und wobei eine Größe von 3 x 8 eine Konfiguration meint, die aus einem 3fach-UND-Gatter und einem 8fach-ODER-Gatter besteht.

8. Addierer nach einem der Ansprüche 5 bis 7, dadurch gekennzeichnet, daß die rekursive SUM-Gleichung, $SUM_{i-1}$, dem folgenden Booleschen Ausdruck (Fig. 6) folgt:

$$SUM_{i-1} = M_{i-1} G^*_{(i,m)} + M_{i-1} T_{(i+1,m+1)}$$
$$PS_{(m+1,z)} + H_{i-1} T_{(i+1,m+1)}' G^*_{(i,m)}' + H_{i-1} G^*_{(i,m)}' PS_{(m+1,z)}'.$$

9. Addierer nach einem der Ansprüche 5 bis 7, dadurch gekennzeichnet, daß die rekursive SUM-Gleichung, $SUM_{i-1}$, dem folgenden Booleschen Ausdruck (Fig. 7) folgt:

$$SUM_{i-1} = M_{i-1} G^*_{(i,m)} + M_{i-1} T_{(i+1,m+1)} G^*_{(m+1,z)} + M_{i-1} T_{(i+1,z+1)} PS_{(z+1,k)} + H_{i-1} T_{(i+1,m+1)}'$$
$$G^*_{(i,m)}' + H_{i-1} G^*_{(i,m)}' T_{(m+2,z+1)}' G^*_{(m+1,z)}' + H_{i-1} G^*_{(i,m)}' G^*_{(m+1,z)}' PS_{(z+1,k)}.$$

10. Addierer nach einem der Ansprüche 5 bis 7, gekennzeichnet durch eine kritische SUM-Gleichung, die den folgenden Booleschen Ausdruck für i = 0 implementiert (Fig. 20):

$$SUM_{(i)} = M_{(i)} G^*_{(i+1,9)} + Q_{(i,5)} 1 R_{(6,15)} +$$
$$Q_{(i,5)} T_{(6,12)} W_{(13,21)} +$$
$$Q_{(i,5)} T_{(6,22)} PS_{(22,29)} +$$
$$H_{(i)} T_{(i+2,10)}' G^*_{(i+1,9)}' +$$
$$X_{(i,9)} Z_{(11,15)} +$$
$$X_{(i,9)} G^*_{(10,15)}' L_{(16,22)} +$$
$$X_{(i,9)} Y_{(10,21)} PS_{(22,29)}'$$

mit:

$$Q_{(i,5)} = M_{(i)} T_{(i+2,5)}$$
$$R_{(6,15)} = T_{(6,10)} G^*_{(10,15)}$$
$$W_{(13,21)} = T_{(13,16)} G^*_{(16,21)}$$
$$X_{(i,9)} = H_{(i)} G^*_{(i+1,9)}'$$
$$Z_{(11,15)} = T_{(11,16)}' G^*_{(10,15)}'$$
$$L_{(16,22)} = G^*_{(16,21)}' T_{(17,22)}'$$
$$Y_{(10,21)} = G^*_{(10,15)}' G^*_{(16,21)}'.$$

11. Addierer nach einem der Ansprüche 5 bis 10, gekennzeichnet durch eine kritische SUM-Gleichung für ein beliebiges Bit aus den Bits 1 bis 31, die die kritische SUM-Gleichung für i = 0 geeignet erweitert und den rekursiven SUM-Gleichungen entspricht.

12. Addierer nach einem der Ansprüche 5 bis 11, dadurch gekennzeichnet, daß die Pseudogrößen und ihre Komplemente für i=0 dem folgenden Booleschen Ausdruck (Fig. 19) folgen:

$$G^*_{(i+1,9)} = G^*_{(i+1,3)} + T_{(i+2,4)} G^*_{(4,6)} + T_{(i+2,4)} T_{(5,7)} G^*_{(7,9)}$$
$$G^*_{(i+1,9)}' = (G^*_{(i+1,3)} + T_{(i+2,4)} G^*_{(4,6)} + T_{(i+2,4)} T_{(5,7)} G^*_{(7,9)})'.$$

**13.** Addierer, nach einem der Ansprüche 5 bis 12, dadurch gekennzeichnet, daß die Hilfsfunktionen durch die folgenden Booleschen Ausdrücke (Fig. 12 bis 18) definiert sind:

$$Q_{(i,5)} = H_{(i)}'T_{(i+1)}T_{(i+2,5)} + H_{(i)}T_{(i+1)}'T_{(i+2,5)}$$

$$R_{(6,15)} = T_{(6,10)}G^*{}_{(10,15)} = T_{(6,9)}T_{(10)}G^*{}_{(10,12)} + T_{(6,9)}T_{(10,13)}G^*{}_{(13,15)}$$

$$W_{(13,21)} = T_{(13,16)}G^*{}_{(16,21)} = T_{(13,16)}G^*{}_{(16,18)} + T_{(13,16)}G^*{}_{(17,19)}G^*{}_{(19,21)}$$

$$X_{(i,9)} = (H_{(i)}' + G^*{}_{(i+1,i+3)} + T_{(i+2,i+4)}G^*{}_{(i+4,i+6)} + T_{(i+2,i+4)}T_{(i+5,i+7)}G^*{}_{(i+7,9)})'$$

$$Z_{(11,15)} = (T_{(11,13)}T_{(14,16)} + G^*{}_{(10,12)} + T_{(11,13)}G^*{}_{(13,15)})'$$

$$L_{(16,22)} = (G^*{}_{(16,18)} + T_{(17,19)}G^*{}_{(19,21)} + T_{(17,20)}T_{(21,22)})'$$

$$Y_{(10,21)} = (G^*{}_{(10,12)} + T_{(11,13)}G^*{}_{(13,15)} + G^*{}_{(16,18)} + T_{(17,19)}G^*{}_{(19,21)})'.$$

**14.** Addierer, nach einem der Ansprüche 5 bis 13, dadurch gekennzeichnet, daß die Neuer-Übertragsgleichung für Bit 22 und dessen Komplement durch die folgenden Booleschen Ausdrucke (Fig. 11) definiert sind:

$$PS_{(22,29)} = G^*{}_{(22,24)} + T_{(23,25)}G^*{}_{(25,27)} + T_{(23,25)}T_{(26,28)}G^*{}_{(28,29)} + T_{(23,26)}T_{(27,30)}PS_{(30)}$$

$$PS_{(22,29)}' = (G^*{}_{(22,24)} + T_{(23,25)}G^*{}_{(25,27)} + T_{(23,25)}T_{(26,28)}G^*{}_{(28,29)} + T_{(23,26)}T_{(27,30)}PS_{(30)})'.$$

**15.** Addierer, nach einem der Ansprüche 5 bis 14, dadurch gekennzeichnet, daß Pseudo-Weitergabesignale für die Bitgruppen 1 bis 3 durch die folgenden Booleschen Ausdrücke (Fig. 8) definiert sind:

$$T_{(i,i+3)} = (A_{(i)} + B_{(i)})(A_{(i+1)} + B_{(i+1)})(A_{(i+2)} + B_{(i+2)})(A_{(i+3)} + B_{(i+3)})$$

$$T_{(i)} = A_{(i)} + B_{(i)}$$

$$T_{(i,i+1)} = (A_{(i)} + B_{(i)})(A_{(i+1)} + B_{(i+1)})$$

$$T_{(i,i+2)} = (A_{(i)} + B_{(i)})(A_{(i+1)} + B_{(i+1)})(A_{(i+2)} + B_{(i+2)}).$$

**16.** Addierer, nach einem der Ansprüche 5 bis 15, dadurch gekennzeichnet, daß Pseudo-Erzeugungssignale für die Bitgruppen 1 bis 2 durch die folgenden Booleschen Ausdrücke (Fig. 9) definiert sind:

$$G^*{}_{(i)} = A_{(i)}B_{(i)}$$

$$G^*{}_{(i,i+1)} = A_{(i)}B_{(i)} + A_{(i+1)}B_{(i+1)}$$

$$G^*{}_{(i,i+2)} = A_{(i)}B_{(i)} + A_{(i+1)}B_{(i+1)} + A_{(i+1)}A_{(i+2)}B_{(i+2)} + B_{(i+1)}A_{(i+2)}B_{(i+2)}.$$

**17.** Addierer, nach einem der Ansprüche 5 bis 16, dadurch gekennzeichnet, daß die Neuer-Übertragsgleichung für Bit 22 und dessen Komplement durch die folgenden Booleschen Ausdrücke (Fig. 11) definiert sind:

$$PS_{(30)} = A_{(30)}B_{(30)} + A_{(31)}B_{(31)} + A_{(31)}Cin + B_{(31)}Cin$$

$$PS_{(30)}' = (A_{(30)}B_{(30)} + A_{(31)}B_{(31)} + A_{(31)}Cin + B_{(31)}Cin)'.$$

## Revendications

**1.** Procédé d'addition pour additionner dans un calculateur numérique des opérandes A, B, chacun ayant une longueur prédéterminée, et pour obtenir un résultat, caractérisé par les étapes suivantes:

a) engendre une pluralité de pseudo-signaux différents comprenant des pseudo-signaux de génération, pseudo-signaux de transmission, pseudo-signaux de demi-somme, et pseudo-signaux de transmission de demi-somme,

b) engendrer un signal de nouveau report décrit par une équation récursive basée sur lesdits pseudo-signaux de génération et pseudo-signaux de transmission,

c) engendrer un signal de somme décrit par une équation de somme récursive en fonction desdits pseudo-signaux et desdits signaux de nouveau report,

ce qui fait que ledit pseudo-signal de génération depuis le bit i jusqu'au bit m, $G^*{}_{(i,m)}$, avec $i < m$, est décrit par l'expression bouléenne suivante:

$$G^*{}_{(i,m)} = 0 \qquad \text{si } i > n;$$

et

$$G^*{}_{(i,m)} = G_i + G_{i+1} + T_{i+1}G_{i+2} + T_{i+1}T_{i+2}G_{i+3} + \ldots + T_{i+1}T_{i+2}T_{i+3}\ldots T_{m-1}G_m \qquad \text{if } i \leq n,$$

où $G_i = A_iB_i$, $T_i = A_i + B_i$ et $A_i$ et $B_i$ sont respectivement les ièmes bits desdits opérandes A, B, i, est un nombre entier et n, est la position binaire la moins significative et où la position binaire i est moins significative que la position binaire i-1 et plus significative que la position binaire i+1,

ledit pseudo signal de transmission depuis le bit i jusqu'au bit m, $T_{(i,m)}$, avec $i < m$, est décrit par l'expression booléenne suivante:

$$T_{(i,m)} = 1 \qquad \text{si } i > n;$$

et

$$T_{(i,m)} = T_i T_{i+1} T_{i+2} \ldots T_{m-1} T_m \qquad \text{si } i \leq n,$$

ledit pseudo-signal de demi-somme pour le bit i, $H_i$, est décrit par l'expression booléenne suivante:

$$H_i = | \qquad \text{si } i > n$$
$$H_i = A_i \lor B_i \qquad \text{si } i \leq n,$$

ledit pseudo-signal de transmission de demi-somme pour le bit i, $M_i$, est décrit par l'expression booléenne suivante:

$$M_i = | \qquad \text{si } H_i = |$$
$$M_i = H_i \lor T_{i+1} \qquad \text{si } H_i \neq |,$$

ledit signal de nouveau report depuis le bit i jusqu'au bit m, $PS_{(i,,m)}$, avec $i \leq m$, est décrit par l'expression booléenne suivante:

$$PS_{(i,m)} = Cin \qquad \text{si } i > n$$
$$PS_{(i,m)} = G^*_{(i,m)} + T_{(i+1,m+1)} PS_{(m+1,z)} \qquad \text{si } i \leq n,$$

z étant un nombre quelconque naturel tel que m<z,

et ladite équation de somme récursive, $SUM_{i-1}$, obéit à l'expression booléenne suivante:

$$SUM_{i-1} = M_{i-1} PS_{(i,m)} + H_{i-1} PS_{(i-1)}'.$$

2. procédé d'addition selon la revendication 1, caractérisé en ce que ladite équation de SOMME récursive $SUM_{i-1}$ obéit à l'expression booléenne suivante:

$$SUM_{i-1} = M_{i-1} G^*_{(i,m)} + M_{i-1} T_{(i+1,m+1)} PS_{(m+1,z)} + H_{i-1} T_{(i+1,m+1)}' G^*_{(i,m)}' + H_{i-1}$$
$$G^*_{(i,m)}' PS_{(m+1,z)}'.$$

3. Procédé d'addition selon la revendication 1, caractérisé en ce que ladite équation de SOMME récursive, $SUM_{i-1}$, obéit à l'expression booléenne suivante:

$$SUM_{i-1} = M_{i-1} G^*_{(i,m)} + M_{i-1} T_{(i+1,m+1)} G^*_{(m+1,z)} + M_{i-1} T_{(i+1,z+1)} PS_{(z+1,k)} + H_{i-1}$$
$$T_{(i+1,m+1)}' G^*_{(i,m)}' + H_{i-1} G^*_{(i,m)}' T_{(m+2,z+1)}' G^*_{(m+1,z)}' + H_{i-1} G^*_{(i,m)}' G^*_{(m+1,z)}' PS_{(z+1,k)}'.$$

4. Procédé d'addition selon l'une quelconque des revendications 1 à 3, caractérisé en ce que des récurrences d'équations de nouveau report sont supprimées jusqu'à ce que lesdites équations de nouveau report soient égales au report dans ladite addition, donnant finalement une pluralité d'expressions de SOMME.

5. Additionneur rapide ayant de multiples étages pour additionner deux opérandes A, B, chacun ayant une longueur prédéterminée, caractérisé par:

un premier étage de circuit logiques (figures 1, 2 et 4) produisant à partir de portions sélectionnées desdits opérandes une pluralité de pseudo-signaux comprenant des pseudo-signaux de génération, pseudo-signaux de transmission, pseudo-signaux de demi-somme, et pseudo-signaux de transmission de demi-somme,

un deuxième étage de circuits logiques (figure 3) produisant à partir des sorties dudit premier étage, un signal de nouveau report et différents signaux auxiliaires, et

un troisième étage de circuits logiques (figures 5 à 7) produisant à partir des sortie desdits premier et deuxième étages un signal de somme,

ledit premier étage produisant un pseudo-signal de génération depuis le bit i jusqu'au bit m, $G^*_{(i,m)}$, avec $i \leq m$, conformément aux expressions booléennes suivantes:

$$G^*_{(i,m)} = 0 \qquad \text{si } i > n;$$

et

$$G^*_{(i,m)} = G_i + G_{i+1} + T_{i+1} G_{i+2} + T_{i+1} T_{i+2} Gi+3 + \ldots + T_{i+1} T_{i+2} T_{i+3} \ldots T_{m-1} G_m \qquad \text{si } i \leq n,$$

où, $G_i = A_i B_i$, $T_i = A_i + B_i$ et $A_i$, $B_i$ sont respectivement les ièmes bits desdits opérandes A, B, i est un nombre entier et n est la position binaire la moins significative, et où la position binaire i est moins significative que la position binaire i-1 et plus significative que la position binaire i+1,

ledit premier étage produisant un pseudo-signal de transmission depuis le bit i jusqu'au bit m, $T_{(i,m)}$, avec $i \leq m$, conformément à l'expression booléenne suivante:

$$T_{(i,m)} = 1 \qquad \text{si } i > n;$$

et

$$T_{(i,m)} = T_i T_{i+1} T_{i+2} \ldots T_{m-1} T_m \qquad \text{si } i \leq n,$$

ledit premier étage produisant un pseudo-signal de demi-somme pour le bit i, $H_i$, conformément à l'expression booléenne suivante:

$$H_i = | \qquad \text{si } i > n$$
$$H_i = A_i \lor B_i \qquad \text{si } i \leq n,$$

ledit premier étage produisant en outre un pseudo-signal de transmission de demi-somme pour le bit i, $M_i$, conformément à l'expression booléenne suivante:

$$M_i = | \quad\quad si\ H_i = |$$
$$M_i = H_i \lor T_{i+1} \quad\quad si\ H_i \neq |,$$

ledit deuxième étage produisant un signal de report nouveau depuis le bit i sur le bit m, $PS_{(i,m)}$, avec $i \leqq m$, conformément à l'expression booléenne suivante:

$$PS_{(i,m)} = Cin \quad\quad si\ i > n$$
$$PS_{(i,m)} = G^*_{(i,m)} + T_{(i+1,m+1)} PS_{(m+1,z)} \quad\quad si\ i \leqq n,$$

z étant un nombre naturel quelconque tel que m<z,

et ledit troisième étage produisant un signal de somme $SUM_{i-1}$ conformément à l'expression booléenne suivante:

$$SUM_{i-1} = M_{i-1} PS_{(i,m)} + H_{i-1} PS_{(i,m)}'.$$

6. Additionneur selon la revendication 5, caractérisé en ce que ladite longueur prédéterminée est de 32 bits.

7. Additionneur selon les revendications 5 ou 6, caractérisé par des recueils ET-OU ayant une dimension ne dépassant pas 3 x 8, ce qui fait qu'un recueil comprend une ou plusieurs cellules, lesdites cellules comprenant des dispositifs logiques capables d'accomplir les expressions booléennes, et ce qui fait qu'une dimension de 3 x 8 indique une configuration constituée d'une porte ET à trois entrées et d'une porte OU à 8 entrées.

8. Additionneur selon l'une quelconque des revendications 5 à 7, caractérisé en ce qu'une équation de SOMME récursive, $SUM_{i-1}$, obéit à l'expression booléenne suivante (figure 6):

$$SUM_{i-1} = M_{i-1} G^*_{(i,m)} + M_{i-1} T_{(i+1,m+1)} PS_{(m+1,z)} + H_{i-1} T_{(i+1,m+1)}' G^*_{(i,m)}' + H_{i-1}$$
$$G^*_{(i,m)}' PS_{(m+1,z)}'.$$

9. Additionneur selon l'une quelconque des revendications 5 à 7, caractérisé en ce qu'une équation de SOMME récursive, $SUM_{i-1}$, obéit à l'expression booléenne suivante (figure 7):

$$SUM_{i-1} = M_{i-1} G^*_{(i,m)} + M_{i-1} T_{(i+1,m+1)} G^*_{(m+1,z)} + M_{i-1} T_{(i+1,z+1)} PS_{(z+1,k)} + H_{i-1}$$
$$T_{(i+1,m+1)}' G^*_{(i,m)}' + H_{i-1} G^*_{(i,m)}' T_{(m+2,z+1)}' G^*_{(m+1,z)}' + H_{i-1} G^*_{(i,m)}' G^*_{(m+1,z)}' PS_{(z+1,k)}'.$$

10. Additionneur selon l'une quelconque des revendications 5 à 7, caractérisé par une équation de SOMME critique mettant en oeuvre l'équation booléenne suivante pour i=0 (figure 20):

$$SUM_{(i)} = M_{(i)} G^*_{(i+1,9)} + Q_{(i,5)} R_{(6,15)} + Q_{(i,5)} T_{(6,12)} W_{(13,21)} + Q_{(i,5)} T_{(6,22)} PS_{(22,29)} + H_{(i)}$$
$$T_{(i+2,10)}' G^*_{(i+1,9)}' + X_{(i,9)} Z_{(11,15)} + X_{i,9} G^*_{(10,15)}' L_{(16,22)} + X_{(i,9)} Y_{(10,21)} PS_{(22,29)}'$$

avec

$$Q_{(i,5)} = M_{(i)} T_{(i+2,5)}$$
$$R_{(6,15)} = T_{(6,10)} G^*_{(10,15)}$$
$$W_{(13,21)} = T_{(13,16)} G^*_{(16,21)}$$
$$X_{(i,9)} = H_{(i)} G^*_{(i+1,9)}'$$
$$Z_{(11,15)} = T_{(11,16)}' G^*_{(10,15)}'$$
$$L_{(16,22)} = G^*_{(16,21)}' T_{(17,22)}'$$
$$Y_{(10,21)} = G^*_{(10,15)}' G^*_{(16,21)}'.$$

11. Additionneur selon l'une quelconque des revendications 5 à 10, caractérisé par une équation de SOMME critique pour l'un quelconque des bits 1-31 s'étendant convenablement depuis ladite équation de SOMME critique 1=0, et conformément auxdites équations de SOMME récursives.

12. Additionneur selon l'une quelconque des revendications 5 à 11, caractérisé en ce que des pseudo-quantités et leurs compléments obéissent à l'expression booléenne suivante pour i=0 (figure 19):

$$G^*_{(i+1,9)} = G^*_{(i+1,3)} + T_{i+2,4} G^*_{(4,6)} + T_{(i+2,4)} T_{(5,7)} G^*_{(7,9)}$$
$$G^*_{(i+1,9)}' = (G^*_{(i+1,3)} + T_{(i+2,4)} G^*_{(4,6)} + T_{(i+2,4)} T_{(5,7)} G^*_{(7,9)})'.$$

13. Additionneur selon l'une quelconque des revendications 5 à 12, caractérisé en ce que des fonctions auxiliaires sont définies par les expressions booléennes suivantes (figures 12 à 18):

$$Q_{(i,5)} = H_{(i)}' T_{(i+1)} T_{(i+2,5)} + H_{(i)} T_{(i+1)}' T_{(i+2,5)}$$
$$R_{(6,15)} = T_{(6,10)} G^*_{(10,15)} = T_{(6,9)} T_{(10)} G^*_{(10,12)} + T_{(6,9)} T_{(10,13)} G^*_{(13,15)}$$
$$W_{(13,21)} = T_{(13,16)} G^*_{(16,21)} = T_{(13,16)} G^*_{(16,18)} + T_{(13,16)} G^*_{(17,19)} G^*_{(19,21)}$$

$$X_{(i,9)} = (H_{(i)}' + G^*_{(i+1+3)} + T_{(i+2,i+4)} G^*_{(i+4,i+6)} + T_{(i+2,i+4)} T_{(i+5,i+7)} G^*_{(i+7,9)})'$$
$$Z_{(11,15)} = (T_{(11,13)} T_{(14,16)} + G^*_{(10,12)} + T_{(11,13)} G^*_{(13,15)})'$$
$$L_{(16,22)} = (G^*_{(16,18)} + T_{(17,19)} G^*_{(19,21)} + T_{(17,20)} T_{(21,22)})'$$
$$Y_{(10,21)} = (G^*_{(10,12)} + T_{(11,13)} G^*_{(13,15)} + G^*_{(16,18)} + T_{(17,19)} G^*_{(19,21)})'$$

14. Additionneur selon l'une quelconque des revendications 5 à 13, caractérisé en ce qu'une équation de nouveau report pour le bit 22 et son complément sont définis par les expressions booléennes suivantes (figure 11):

$$PS_{(22,29)} = G^*_{(22,24)} + T_{(23,25)} G^*_{(25,27)} + T_{(23,25)} T_{(26,28)} G^*_{(28,29)} + T_{(23,26)} T_{(27,30)} PS_{(30)}$$
$$PS_{(22,29)}' = (G^*_{22,24)} + T_{(23,25)} G^*_{(25,27)} + T_{(23,25)} T_{(26,28)} G^*_{(28,29)} + T_{(23,26)} T_{(27,30)} PS_{30)})'.$$

15. Additionneur selon l'une quelconque des revendications 5 à 14, caractérisé en ce qu'un pseudo-signal de transmission pour des groupes binaires de 1 à 3 est défini par les expressions booléennes suivantes (figure 8):

$$T_{(i,i+3)} = (A_{(i)} + B_{(i)})(A_{(i+1)} + B_{(i+1)}) (A_{(i+2)} + B_{(i+2)}) (A_{(i+3)} + B_{(i+3)})$$
$$T_{(i)} = A_{(i)} + B_{(i)}$$
$$T_{(i,i+1)} = (A_{(i)} + B_{(i)} (A_{(i+1)} + B_{(i+1)})$$
$$T_{(i,i+2)} = (A_{(i)} + B_{(i)}) (A_{(i+1)} + B_{(i+4)})(A_{(i+2)} + B_{(i+2)}).$$

16. Additionneur selon l'une quelconque des revendications 5 à 15, caractérisé en ce qu'un pseudo-signal de génération pour des groupes binaires 1 à 2 est défini par les expressions booléennes suivantes (figure 9):

$$G^*_{(i)} = A_{(i)} B_{(i)}$$
$$G^*_{(i,i+1)} = A_{(i)} B_{(i)} + A_{(i+1)} B_{(i+1)}$$
$$G^*_{(i,i+2)} = A_{(i)} B_{(i)} + A_{(i+1)} B_{(i+1)} + A_{(i+1)} A_{(i+2)} B_{(i+2)} B_{(i+1)} A_{(i+2)} B_{(i+2)}.$$

17. Additionneur selon l'une quelconque des revendications 5 à 16, caractérisé en ce qu'une équation de nouveau report pour le bit 30 et son complément sont définis par les expressions booléennes suivantes (figure 10):

$$PS_{(30)} = A_{(30)} B_{(30)} + A_{(31)} B_{(31)} + A_{(31)} Cin + B_{(31)} Cin$$
$$PS_{(30)}' = (A_{(30)} B_{(30)} + A_{(31)} B_{(31)} + A_{(31)} Cin + B_{(31)} Cin)'.$$

Figure 1.

Figure 2.

Cin ————————————————————————— SEL ——PS(i,m)
i>n ——————————————————————————— 1 of
                                  2

G*(i,m) ——————————————————— OR ——

T(i+1,m+1) —————— AND
PS(m+1,z) ———————

Figure 3.

undefined ———————————— SEL ——Hi
i>n —————————————————————— 1 of
                            2

Ai —— XOR
Bi ——

                                    SEL ——Mi
                                    1 of
                                    2

Ti+1 ——————————————— XOR

Figure 4.

Mi-1 ————————— AND ————————— OR ——SUMi-1
PS(i,m) ———————

                INV —— AND·

Hi-1 ———————————

Figure 5.

Figure 6.

Figure 7.

Figure 8.

Figure 9.

Figure 10.

28

Figure 11.

Figure 12.

Figure 13.

Figure 14.

Figure 15.

Figure 16.

Figure 17.

Hi' ─────────────┐
Ti+1 ────────────┤ AND ──────── OR ──Q(i,5)
T(i+2,5) ────────┤

Hi ──────────────┐
Ti+1' ───────────┤ AND ────

Figure 18.

G*(i+1,3) ─────────────────── OR ──────G*(i+1,9)

T(i+2,4) ────────┐
G*(4,6) ─────────┤ AND ───── INV ──G*(i+1,9)'

T(5,7) ──────────┐
G*(7,9) ─────────┤ AND

Figure 19.

Figure 20.